# EUROPÄISCHE PATENTSCHRIFT

(11) **EP 4 062 596 B1**
(45) Veröffentlichungstag und Bekanntmachung des Hinweises auf die Patenterteilung: **27.08.2025**
(21) Anmeldenummer: 20811307.6
(22) Anmeldetag: 20.11.2020
(51) Int. Cl.: H04L 12/46, H04L 12/403, H04J 3/06, H04L 12/66, H04L 12/40

(54) **VERFAHREN, SYSTEM UND GATEWAY ZUR VERNETZUNG ZEITSENSITIVER FELDBUSSE**
METHOD, SYSTEM, AND GATEWAY FOR LINKING TIME-SENSITIVE FIELDBUSES
PROCÉDÉ, SYSTÈME ET PASSERELLE POUR RELIER DES BUS DE TERRAIN SENSIBLES AU TEMPS

(30) Priorität: 20.11.2019 DE 102019217913
(43) Veröffentlichungstag der Anmeldung: 28.09.2022
(73) Patentinhaber: Wago Verwaltungsgesellschaft mbH, 32423 Minden (DE)
(72) Erfinder: SCHWAMBORN, Fabian, 32657 Lemgo (DE)
(74) Vertreter: Bardehle Pagenberg Partnerschaft mbB Patentanwälte Rechtsanwälte
(86) Internationale Anmeldenummer: PCT/EP2020/082919
(87) Internationale Veröffentlichungsnummer: WO 2021/099585

(56) Entgegenhaltungen:
- DE-A1- 102012 204 586
- US-A1- 2016 080 533

## Beschreibung

### Gebiet der Erfindung

Die Erfindung betrifft zeitsensitive Feldbussysteme, insbesondere industrielle Feldbussysteme zur Steuerung industrieller Systeme. Insbesondere betrifft die Erfindung ein Verfahren, ein System und ein Gateway zur Vernetzung mindestens zweier zeitsensitiver Feldbusse.

### Hintergrund der Erfindung

Feldbusse dienen dazu, verschiedene Teilnehmergeräte (z.B. Feldgeräte wie Sensoren, Aktoren, Messfühler, Stellglieder, usw. sowie Controller, wie z.B. Steuerungs- bzw. Automatisierungsgeräte, Speicher-Programmierbare-Steuerungen, SPS, usw.) in einer Anlage (z.B. industrielle Fertigungsanlage, Fahrzeug, Gebäude usw.) zum Zweck der Kommunikation untereinander zu verbinden. Die Kommunikation findet dabei insbesondere, jedoch nicht ausschließlich, zwischen verschiedenen Feldgeräten und einem Feldbus-Controller statt, der die in der Anlage ablaufenden Prozesse steuert und überwacht. Ein Teilnehmergerät kann ein Feldgerät oder ein Controller sein und weist insbesondere eine Schnittstelle mit dem Feldbus auf.

Die über einen Feldbus zu übertragenden Nachrichten (z.B. Datenblöcke, Datenströme) sind dabei wenigstens zum Teil zeitsensitiv, d.h. sie haben Echtzeit-Anforderungen in Bezug auf die Übertragungslatenzzeit. Beispielsweise ist es für derartige zeitsensitive Daten erforderlich, dass eine von einem Teilnehmergerät abgesendete Nachricht innerhalb einer vorhersagbaren Zeitspanne zuverlässig vom Feldbus-Controller oder einem anderen an den Feldbus angeschlossenen Feldgerät empfangen wird.

Die zwischen Teilnehmergeräten des Feldbusses zu übertragenden Daten umfassen nicht nur Wertkommunikation, wie z.B. Messwerte, Stellwerte oder Anweisungen, sondern auch Ereigniskommunikation zur zeitlichen Koordination von Maschinen und Anlagenteilen. Beispielsweise erfolgt die Koordination und Synchronisation von Bewegungen von Maschinenteilen zunehmend nicht mehr über mechanische Vorrichtungen (z.B. Metallpressen mit mechanisch starr gekoppelten Einlege- und Auswurfvorrichtungen im Maschinentakt, Nockenwellen, Getriebe usw.), sondern über digitale Nachrichten, die mit Echtzeit-Anforderungen über Feldbusse übertragen werden.

Ein Feldbus ist einer Zeitdomäne zugeordnet, in welcher alle Teilnehmergeräte jeweils einen Zeitgeber (z.B. eine Uhr) aufweisen. Die Zeitgeber der Teilnehmergeräte sind innerhalb der Zeitdomäne untereinander synchronisiert und weisen somit ein gemeinsames Verständnis der Zeit auf. Damit können alle Teilnehmergeräte eines Feldbusses einem festgelegten Feldbus-Kommunikationszyklus folgen und sind aufeinander abgestimmt, um zum richtigen Zeitpunkt die entsprechenden Aktionen ausführen. Ein Teilnehmergerät des Feldbusses fungiert dabei als Master für die Zeitdomäne, wobei der Zeitgeber des Masters die Zeitreferenz für die anderen Teilnehmergeräte der Zeitdomäne liefert. Letztere Teilnehmergeräte, die innerhalb der Zeitdomäne ihre Zeit von dem Master ableiten, werden auch als Slave bezeichnet. Die Rolle des Zeit-Masters im Feldbus kann dabei von einem Feldbus-Controller, jedoch auch von einem anderen an den Feldbus angeschlossenen Teilnehmergerät übernommen werden. Der Zeit-Master des Feldbusses kann seine Zeitbasis mit einer anderen Zeitbasis synchronisieren, beispielsweise mit dem Zeit-Master eines anderen Feldbusses oder mit einer hierarchisch übergeordneten Zeitbasis. Indem die Master mehrerer Feldbusse ihre jeweilige Feldbus-Zeit miteinander synchronisieren, kann eine Zeitdomäne auch mehrere Feldbusse umfassen. Durch die Synchronisation der Zeitbasis werden zwar die "Uhren" angeglichen. Dies bedeutet jedoch nicht notwendigerweise, dass zwei Feldbusse innerhalb einer Zeitdomäne gleiche Kommunikationszyklen aufweisen.

Eine erste Generation von Feldbussen wurde entwickelt, um den Verkabelungsaufwand durch die früher übliche Parallelverdrahtung von Maschinenteilen mittels Kabelbäumen durch digitale Übertragungstechnik zu ersetzen. Hierfür wurden mehrere, teils proprietäre Feldbusprotokolle entwickelt. Spätere Generationen von Feldbussen basieren vor allem auf dem Ethernet-Standard IEEE 802.3, wobei die Ethernet-Protokolle modifiziert oder erweitert wurden, um zeitsensitive Netzwerke (engl. Time-Sensitive Networks, TSN) zu realisieren.

Standards für Echtzeit-Ethernet-Protokolle werden beispielsweise von der IEEE 802.1Q Taskgroup für TSN-Netzwerke entwickelt. Ein echtzeit-unterstützender Scheduler (time-aware scheduler) wird beispielsweise durch den IEEE802.1QBv-Standard definiert. Der Scheduler ermöglicht es, die Kommunikation in einem Netzwerk in feste, sich periodisch wiederholende Kommunikationszyklen einzuteilen und innerhalb der Zyklen feste Zeitschlitze zur Übertragung zeitkritischer Daten zu definieren, reservieren oder auszuhandeln. Hierdurch kann eine getaktete Ende-zu-Ende Übertragung zwischen zwei Teilnehmergeräten realisiert werden.

Außerhalb der für Echtzeit-Übertragung vorgesehenen Zeitschlitze können nicht-zeitsensitive Daten (Best-Effort-Daten) übertragen werden, wobei hierfür die bekannten Protokolle für eine paketvermittelte Übertragung (z.B. Ethernet-Protokoll) verwendet werden. Durch den echtzeit-unterstützenden Scheduler können Schutzbänder eingerichtet werden, um ein Überlappen von Übertragungen nicht-zeitsensitiver Datenpakete mit den für Echtzeitübertragung reservierten Zeitschlitzen zu vermeiden.

Das Dokument US 2016/080533 A1 offenbart ein Gateway, das zwischen zwei Netzwerken eines Fahrzeugs Daten übertragen kann. Hierbei ist das erste Netzwerk ein zeitsensitives FlexRay Netzwerk und das zweite Netzwerk ein Fahrzeug-Ethernet-Netzwerk.

Des Weiteren ist es in TSN-Netzwerken möglich, die Übertragung nicht-zeitsensitiver Datenpakete während der Echtzeit-Intervalle zu unterbrechen und danach fortzusetzen. Auf diese Weise wird in einem TSN-fähigen Netzwerk die Koexistenz zeitsensitiver und nicht-zeitsensitiver Kommunikation ermöglicht.

Im Zuge der zunehmenden Digitalisierung und Vernetzung von Anlagen (z.B. eines gesamten Produktionsstandorts) besteht die Notwendigkeit, Kommunikation zwischen Feldbussen sowie die Kommunikation zwischen einem Feldbus und Einrichtungen einer übergeordneten Steuerungsebene, Prozessleitebene, Betriebsleitebene und/oder Unternehmensebene oder zu ermöglichen. Die Vernetzung betrifft sowohl nicht-zeitsensitive Daten als auch zeitsensitive Daten.

Zwar basieren die meisten heute gebräuchlichen Echtzeit-Protokolle für Feldbusse auf Ethernet, jedoch gibt es trotz dieser Gemeinsamkeit technische Unterschiede, so dass verschiedene Feldbus-Typen untereinander inkompatibel oder nicht vollständig kompatibel sind. Es kann auch vorkommen, dass verschiedene Generationen von Feldbussen verwendet werden, beispielsweise wenn Teile einer Anlage hinzugefügt, ausgetauscht oder modernisiert werden, wobei Feldbusse unterschiedlicher Generationen nicht notwendigerweise vollständig kompatibel sind. Gegenwärtig werden Anstrengungen unternommen, universell verwendbare Echtzeit-Protokolle zu spezifizieren, welche die vielen proprietären und untereinander nicht kompatiblen Protokolle für zeitsensitive Feldbusse ablösen sollen. Jedoch wird deren Verwendung den Austausch bzw. die Umrüstung bestehender Feldbussysteme bedingen, was häufig wirtschaftlich nicht vertretbar ist.

Bestehende Lösungen für die zeitsensitive Kommunikation zwischen zwei oder mehreren Feldbussen gehen davon aus, dass alle zu koppelnden Feldbusse sowohl ein einheitliches Zeitverständnis aufweisen, wobei jedoch auch alle Zeitversätze sowie Zeitdauern und/oder Startzeiten der Feldbus-Kommunikationszyklen synchronisiert sind. Feldbusse werden jedoch häufig zu Beginn einer Fertigung aufwendig konfiguriert, so dass die durch den Feldbus gesteuerten Maschinen und/oder Anlagenteile optimal aufeinander abgestimmt sind. Eine Angleichung der Zykluszeiten eines bestehenden Feldbusses an neu hinzukommende Anlagenteile mit weiteren Feldbussen würde jedoch eine Neukonfiguration der durch den Feldbus gesteuerten bestehenden Prozesse notwendig machen.

Es besteht daher ein Bedarf, zeitsensitive Feldbusse miteinander zu vernetzen, die nicht vollständig miteinander kompatibel sind.

### Zusammenfassung der Erfindung

Die Aufgabe wird insbesondere durch ein Verfahren zur Vernetzung eines ersten zeitsensitiven Feldbusses mit einem zweiten zeitsensitiven Feldbus gemäß Anspruch 1, durch ein System zur Vernetzung mindestens zweier zeitsensitive Feldbusse gemäß Anspruch 17 sowie durch ein Gateway zur Vernetzung mindestens zweier zeitsensitive Feldbusse gemäß Anspruch 11 gelöst.

Zur Lösung der Aufgabe wird insbesondere ein Gateway verwendet, das die Kommunikation zwischen zeitsensitiven Feldbussen vermittelt. Da das Gateway die jeweilige Zeitdomäne aller daran angeschlossenen Feldbusse unterstützt, können die Feldbusse weitgehend ohne Angleichung der Zeitdomänen und insbesondere der innerhalb der Feldbusse definierten Zeiten der Kommunikationszyklen miteinander kommunizieren. Das gilt sowohl für zeitsensitive Daten als auch für nicht-zeitsensitive Daten.

Ein Aspekt der vorliegenden Erfindung betrifft ein Verfahren zur Vernetzung eines ersten zeitsensitiven Feldbusses mit einem zweiten zeitsensitiven Feldbus. Der erste zeitsensitive Feldbus umfasst ein erstes Teilnehmergerät und weist eine eigene erste Zeitdomäne auf. Der zweite zeitsensitiver Feldbus umfasst ein zweites Teilnehmergerät und weist eine zweite eigene Zeitdomäne auf. Die erste Zeitdomäne und die zweite Zeitdomäne sind frequenzsynchronisiert. Der erste und der zweite Feldbus sind mittels eines Gateways zur Datenübertragung miteinander verbunden. Das Verfahren umfasst das Bestimmen einer ersten Zykluszeitdauer der ersten Zeitdomäne und einer zweiten Zykluszeitdauer der zweiten Zeitdomäne durch das Gateway zu einem Referenzzeitpunkt sowie das Bestimmen eines Zeitversatzes zwischen der ersten Zeitdomäne und der zweiten Zeitdomäne durch das Gateway zu dem Referenzzeitpunkt.

Die Frequenzsynchronisation kann durch eine Synchronisation der Taktfrequenzen in den Zeitdomänen des ersten und zweiten Feldbusses erfolgen. Durch eine derartige Frequenzsynchronisation können der erste und zweite Feldbus bzw. die erste und zweite Zeitdomäne zwar unterschiedlich definierte Zeiten aufweisen, jedoch ist der Zeitversatz zeitinvariant, d.h. zeitlich konstant. Durch eine Synchronisation nur der Frequenzen in der ersten und zweiten Zeitdomäne ist können die Zeitregime in den Feldbussen weitgehend unangetastet bleiben. Insbesondere wird ein harter Zeitsprung, der ansonsten bei Angleichung der ersten und zweiten Feldbuszeit eintreten könnte, in einem oder in beiden Feldbussen vermieden. Die Angleichung der Frequenzen kann dabei über einen Zeitraum erfolgen, der den Betrieb der in den Feldbussen ablaufenden Prozesse nicht beeinträchtigt.

Dadurch, dass das Gateway die erste Zykluszeitdauer der ersten Zeitdomäne und die zweiten Zykluszeitdauer der zweiten Zeitdomäne zu einem Referenzzeitpunkt sowie das Bestimmen eines Zeitversatzes zwischen der ersten Zeitdomäne und der zweiten Zeitdomäne zu dem Referenzzeitpunkt vornimmt, kann das Gateway als Mittler oder "Dolmetscher" zwischen den Zeitregimen der Feldbusse agieren. Diese Funktion kann optional als Proxy-Funktionalität realisiert werden, bei dem das Gateway ein virtuelles Abbild eines Teilnehmergeräts des ersten Feldbusses und/oder ein virtuelles Abbild eines Teilnehmergeräts des zweiten Feldbusses bereitstellt, wobei die virtuellen Abbilder der Teilnehmergeräte dazu eingerichtet sind, als Scheduler zu fungieren ("Scheduler-Proxy"), um Zeitschlitze zur zeitkritischen Kommunikation mit Teilnehmergeräten des jeweils anderen Feldbusses auszuhandeln oder anderweitig zu bestimmen. Das Aushandeln oder Bestimmen kann beispielsweise gemäß den durch den IEEE802.1QBv-Standard definierten Verfahren erfolgen. Ein derartiges Scheduler-Proxy kann dabei als Schnittstelle für die Protokolle zur Einrichtung von Zeitschlitzen zur zeitsensitiven Kommunikation fungieren und durch die Teilnehmergeräte eines Feldbusses in gleicher Weise wie andere Teilnehmergeräte des eigenen Feldbusses angesprochen werden. Beispielsweise kann ein Scheduler-Proxy Anfragen nach Zeitschlitzen entgegennehmen oder entsprechende Bestätigungen gemäß einem spezifizierten Protokoll ausgeben. Da das Gateway die erste Zykluszeitdauer, die zweite Zykluszeitdauer sowie den Zeitversatz zu einem Referenzzeitpunkt kennt, kann das Gateway Umrechnungen der Zeitregime vornehmen. Das Gateway kann umgerechnete bzw. umzurechnende Zeitpunkte und/oder Zeitintervalle im jeweils gültigen Zeitregime über das Scheduler-Proxy ausgeben oder empfangen. Hierdurch entfällt beispielsweise die Notwendigkeit einer Umrechnung zwischen den Zeitregimen in den Feldbussen (z.B. auf Anwendungsebene), wodurch eine Vereinfachung bei der Einrichtung einer zeitsensitiven Kommunikation erreicht wird.

In einer Ausführungsform umfasst das Verfahren weiterhin den Schritt des Kommunizierens der ersten Zykluszeitdauer der ersten Zeitdomäne an den zweiten Feldbus, und des Kommunizierens der zweiten Zykluszeitdauer der zweiten Zeitdomäne an den ersten Feldbus durch das Gateway. Dadurch, dass die Zykluszeitdauern des jeweils anderen Feldbusses den Teilnehmergeräten bekannt sind, können diese zu einer Planung der Kommunikation verwendet werden. Optional umfasst der Schritt auch das Kommunizieren des Zeitversatzes mit Bezug auf den Referenzzeitpunkt und des Referenzzeitpunkts selbst an beide Feldbusse durch das Gateway. Hierdurch kann, sofern notwendig, eine Umrechnung der Zeitregime auf den jeweils anderen Feldbus vorgenommen werden.

In einer Ausführungsform umfasst das Verfahren weiterhin das Empfangen durch das Gateway einer Anforderung des zweiten Teilnehmergeräts des zweiten Feldbusses eines Zeitschlitzes zur Übertragung von zeitsensitiven Daten vom ersten Feldbus an den zweiten Feldbus, das Weiterreichen durch das Gateway der Anforderung an das erste Teilnehmergerät im ersten Feldbus, das Empfangen durch das Gateway einer Bestätigungsnachricht von dem ersten Teilnehmergerät des ersten Feldbusses sowie das Weiterreichen der Bestätigungsnachricht vom Gateway an das zweite Teilnehmergerät des zweiten Feldbusses. Beispielsweise ist das erste Teilnehmergerät im ersten Feldbus als Scheduler dazu eingerichtet, derartige Anforderungen entgegenzunehmen, Zeitschlitze entsprechend zu reservieren, und Bestätigungsnachrichten zu erzeugen und auszusenden. Dies kann dadurch erreicht werden, dass das erste Teilnehmergerät des ersten Feldbusses die im IEEE802.1QBv-Standard definierten Verfahren und Protokolle ausführen kann. Auf diese Weise kann eine Übertragung von zeitsensitiven Daten zwischen den Feldbussen eingerichtet werden.

In einer Ausführungsform kann das Verfahren weiterhin den Schritt des Konvertierens durch das Gateway (30), von Zeitpunkten oder Intervallen aufweisen, welche sich auf die Zeitdomäne eines Feldbusses beziehen, in Zeitpunkte bzw. Intervalle, welche sich auf die Zeitdomäne des jeweils anderen Feldbusses beziehen. Hierdurch kann das Gateway als "Dolmetscher" zwischen den Zeitregimen des ersten und zweiten Feldbusses fungieren. Dies kann optional sogar derart ausgestaltet werden, dass der Austausch der Zeitpunkte und/oder Intervalle über in dem Gateway eingerichtete Proxy-Instanzen erfolgt, welche für jeweils einen Feldbus einen Terminierungspunkt der entsprechenden Kommunikationsprotokolle darstellen. Beispielsweise kann ein Scheduler-Proxy für den ersten Feldbus Anfragen aus dem zweiten Feldbus unter Verwendung der entsprechenden Kommunikationsprotokolle des zweiten Feldbusses empfangen. Diese Anfragen können Angaben von Zeitpunkten und -intervallen gemäß der zweiten Zeitdomäne enthalten, wobei das Gateway die Konvertierung in das Zeitregime (Zeitdomäne) des ersten Feldbusses übernimmt, und an den ersten Feldbus weiterleitet. Enthält eine Bestätigungsmeldung oder sonstige Antwort aus dem ersten Feldbus eine Angabe von Zeitpunkten oder Zeitintervallen, so können diese durch das Gateway in Zeitpunkte und/oder Zeitintervalle des zweiten Feldbusses konvertiert werden und durch das Scheduler-Proxy an das entsprechende Teilnehmergerät im zweiten Feldbus ausgegeben werden. Auf diese Weise können Teilnehmergeräte jeweils mit dem anderen Feldbus kommunizieren, ohne dass sie auszutauschende Zeitpunkte oder -intervalle in das andere Zeitregime umrechnen müssen. Hierdurch wird die Anbindung von Feldbussen mit unterschiedlichen Zeitdomänen wesentlich vereinfacht.

In einer beispielhaften Ausführungsform umfasst das Verfahren weiterhin, dass die Anforderung des zweiten Teilnehmergeräts des zweiten Feldbusses eines Zeitschlitzes zur Übertragung von zeitsensitiven Daten eine Angabe von einem oder mehreren Zeitpunkten und/oder einem oder mehreren Zeitintervallen umfasst, die auf die Zeitdomäne des zweiten Feldbusses bezogen sind. Hierbei bestimmt das Gateway den einen oder die mehreren Zeitpunkte bzw. das einen oder die mehreren Zeitintervalle aus der Anforderung bezogen auf die Zeitdomäne des ersten Feldbusses unter Berücksichtigung des Zeitversatzes mit Bezug auf den Referenzzeitpunkt. Die an das erste Teilnehmergerät im ersten Feldbus weitergereichte Anforderung enthält dann die Angabe des einen oder der mehreren Zeitpunkte bzw. des einen oder mehreren Zeitintervalle bezogen auf die Zeitdomäne des ersten Feldbusses. Die Bestätigungsnachricht von dem ersten Teilnehmergerät des ersten Feldbusses möge eine Angabe von einem oder mehreren Zeitpunkten und/oder einem oder mehreren Zeitintervallen umfassen, die auf die Zeitdomäne des zweiten Feldbusses bezogen sind. Das Gateway bestimmt hieraus den einen oder die mehreren Zeitpunkte bzw. das eine oder die mehreren Zeitintervalle aus der Bestätigungsnachricht bezogen auf die Zeitdomäne des zweiten Feldbusses unter Berücksichtigung des Zeitversatzes mit Bezug auf den Referenzzeitpunkt, so dass die weitergereichte Bestätigungsnachricht an das zweite Teilnehmergerät des zweiten Feldbusses die Angabe des einen oder der mehreren Zeitpunkte bzw. des einen oder mehreren Zeitintervalle bezogen auf die Zeitdomäne des ersten Feldbusses umfasst. Somit braucht weder im ersten Feldbus noch im zweiten Feldbus eine Konvertierung der Zeitregime zu erfolgen. Vielmehr bekommen der erste bzw. zweite Feldbus die Zeitangaben aus dem anderen Feldbus in bezogen auf ihr eigenes Zeitregime geliefert. In einer optionalen Ausführungsform kann das Gateway ein Scheduler-Proxy bereitstellen, der für den zweiten Feldbus als Protokoll-Terminierungspunkt fungiert und sich somit wie ein Teilnehmergerät des zweiten Feldbusses verhält.

In einer Ausführungsform kann das Verfahren weiterhin ein Setzen eines ersten Zeitschlitzes zur Kommunikation zeitsensitiver Daten im ersten Feldbus durch das erste Teilnehmergerät des ersten Feldbusses enthalten. Das Setzen kann derart erfolgen, dass sich der erste Zeitschlitz des ersten Feldbusses und der zweite Zeitschlitz des zweiten Feldbusses zeitlich überlappen. Hierbei stellt der Überlappungsbereich eine zeitliche Schnittmenge dar, wobei zeitsensitive Daten zwischen den Feldbussen mit keiner Verzögerung oder nur mit geringen beherrschbaren Verzögerungen ausgetauscht werden können, die einer Echtzeitanforderung genügen. Hierdurch wird erreicht, dass auch für eine Feldbus-übergreifende Kommunikation zeitsensitiver Echtzeit-Daten diejenige Instanz (z.B. echtzeit-unterstützender Scheduler) dafür zuständig ist, lokal für den ersten Feldbus dafür eingerichtet ist. Beispielsweise kann ein bereits vor der Anbindung bestehendes Teilnehmergerät mit echtzeit-unterstützender Scheduling Funktion hierfür herangezogen werden, so dass nur minimale Veränderungen einer bestehenden Feldbus-Konfiguration nötig sind.

In einer Ausführungsform kann das Verfahren weiterhin den Schritt des Durchleitens von zeitsensitiven Daten vom zweiten Feldbus auf den ersten Feldbus oder umgekehrt durch das Gateway während der Überlappung des ersten Zeitschlitzes und des zweiten Zeitschlitzes umfassen. Damit wird eine getaktete Ende-zu-Ende Übertragung zwischen zwei Teilnehmergeräten über Feldbusgrenzen hinweg realisiert. Das Durchleiten kann hierbei exklusiv auf der physikalischen Schicht erfolgen, beispielsweise durch einen analogen Signalpfad durch das Gateway zwischen Anschlüssen für den ersten und den zweiten Feldbus. Hierdurch können Verzögerungen in den Signallaufzeiten minimiert werden. Eine akzeptable Durchleitung der zeitsensitiven Daten kann auch dadurch erfolgen, dass das Gateway einen Terminierungspunkt für die physikalische Schicht seitens des zweiten Feldbusses bereitstellt. Dann kann das Gateway die Signale empfangen, demodulieren und, wenn nötig dekodieren (z.B. bezüglich der Kanalcodierung), so dass die zeitsensitiven Daten an der Oberkante der physikalischen Schicht als Datenbits zur Verfügung stehen. Diese können dann im Gateway an eine physikalische Schnittstelle seitens des ersten Feldbusses weitergereicht werden, wo ggf. eine Codierung (z.B. Kanalcodierung) und eine Modulation für die Übertragung in den ersten Feldbus erfolgt. Beispielsweise kann das Weiterreichen der Daten in der sog. Medium-Access- (MAC-) Protokollschicht über eine sog. MAC-Brücke (z.B. nach dem IEE 802.1D Standard) erfolgen. Hierdurch kann beispielsweise der MAC-Protokoll-Header zur Weiterleitung an den anderen Feldbus ausgelesen und ggf. verändert werden. Das Durchleiten der Daten kann auch auf einer höheren Protokollschicht als der MAC-Schicht erfolgen, wobei das Gateway die entsprechenden Protokollstapel bereitstellt. Durch die Verarbeitung im Gateway können Verzögerungen resultieren. Da der erste bzw. der zweite Zeitschlitz jedoch für die Übertragung der zeitsensitiven Daten reserviert ist, kann eine Zwischenspeicherung in Warteschlangen weitgehend vermieden werden. Die auftretenden Verzögerungen können somit vorhersagbar und beherrschbar gehalten werden, so dass die Echtzeitanforderungen an die Übertragung erfüllt werden.

In einer Ausführungsform kann das Verfahren weiterhin das Übertragen von nicht-zeitsensitiven Daten durch das Gateway umfassen, in Zeiten außerhalb des ersten Zeitschlitzes des ersten Feldbusses und außerhalb des zweiten Zeitschlitzes des zweiten Feldbusses zwischen dem ersten Feldbus und dem zweiten Feldbus. Damit können beispielsweise sog. Best-Effort-Daten zur Konfiguration einzelner Teilnehmergeräte, oder auch nicht-zeitkritische Messdaten oder Befehlsdaten zwischen den Feldbussen ausgetauscht werden, wobei die ersten und zweiten Zeitschlitze für den Austausch zeitsensitiver Daten zwischen den Feldbussen reserviert bleiben. Das Gateway kann für Best-Effort-Daten eine Zwischenspeicherung der Daten vornehmen. Ein Austausch von Best-Effort-Daten ist auch möglich, wenn kein gemeinsamer Zeitschlitz zum Austausch von zeitsensitiven Daten zwischen den Feldbussen eingerichtet ist. Beispielsweise können der erste und der zweite Feldbus unabhängig voneinander Zeitschlitze zur Übertragung von zeitsensitiven Daten jeweils innerhalb der Feldbusse vereinbart haben. Das Gateway kann jeweils zu Zeiten außerhalb der Zeitschlitze zur Übertragung zeitsensitiver Daten die Best-Effort-Daten übertragen, ggf. unter Zwischenspeicherung. Beispielsweise können auf diesem Wege die beschriebenen Anforderungen und Bestätigungsnachrichten zur Vereinbarung von überlappenden Zeitschlitzen zur Übertragung zeitsensitiver Daten zwischen den Feldbussen übertragen werden.

Es ist in der Praxis möglich, dass neben dem Zeitversatz zwischen der ersten und zweiten Zeitdomäne weitere zeitliche Unterschiede bestehen, z.B. in Bezug auf unterschiedliche Dauern der ersten und zweiten Zeitschlitze sowie der zeitlichen Lage ersten und zweiten Zeitschlitze für die Übertragung zeitsensitiver Daten. In einem Bereich, in dem die ersten und zweiten Zeitschlitze überlappen, können zeitsensitive Daten zwischen den Feldbussen durch das Gateway durchgeleitet werden. Außerhalb des Überlappungsbereichs können im ersten bzw. zweiten Feldbus dennoch Zeitschlitze zur Übertragung zeitsensitiver Daten reserviert sein, wobei diese Zeitspannen beispielsweise für die Übertragung zeitsensitiver Daten innerhalb der Feldbusse unabhängig voneinander genutzt werden können.

Zur Durchführung der genannten Frequenzsynchronisation der ersten und zweiten Zeitdomäne kann das Gateway einen ersten Zeitgeber und einen zweiten Zeitgeber aufweisen. Zur Frequenzsynchronisation der beiden Feldbusse möge beispielsweise der erste Zeitgeber als Slave mit der ersten Zeitdomäne des ersten Feldbusses synchronisiert werden. Des Weiteren möge der zweiten Zeitgeber als Slave mit der zweiten Zeitdomäne des zweiten Feldbusses synchronisiert werden. Dann kann zunächst ausschließlich die Frequenz des ersten Zeitgebers als Slave mit Frequenz der zweiten Zeitdomäne des zweiten Zeitgebers synchronisiert werden, und danach der erste Zeitgeber als Master für den ersten Feldbus gesetzt werden, um die Frequenz (des ersten Feldbusses auf die Frequenz des ersten Zeitgebers zu setzen.

Da das Gateway eigene Zeitgeber aufweist, die (z.B. ausschließlich) in der Frequenz miteinander synchronisiert werden, kennt das Gateway jeweils die in der ersten und zweiten Zeitdomäne definierte Zeit und kann beispielsweise die Übertragung nicht-zeitsensitiver Daten derart koordinieren, dass die Zeitschlitze zur Übertragung zeitsensitiver Daten nicht berührt werden. Des Weiteren ist nach erfolgter Frequenzsynchronisation garantiert, dass die zeitlichen Unterschiede zwischen den Feldbussen zwar noch vorhanden sind, jedoch zeitinvariant sind, und somit nicht "davonlaufen". In dem beschriebenen Szenario leitet der erste Feldbus seine Zeitbasis von dem zweiten Feldbus ab, wobei das Setzen des ersten Zeitgebers als Master für den ersten Feldbus lediglich einen geringfügigen Eingriff in das Zeitregime des ersten Feldbusses darstellt. Beispielsweise kann das Setzen auf die Frequenz des ersten Zeitgebers über einen Zeitraum erfolgen, der einen harten Zeitsprung vermeidet. Der erste Feldbus kann somit während des Betriebs "unter Last" synchronisiert werden.

Ein weiterer Aspekt der Erfindung betrifft ein System zur Vernetzung mindestens zweier zeitsensitiver Feldbusse, aufweisend einen ersten zeitsensitiven Feldbus, aufweisend ein erstes Teilnehmergerät und eine eigene erste Zeitdomäne, wobei die erste Zeitdomäne erste Zeitschlitze zur Übertragung zeitsensitiver Daten beinhaltet. Das System weist weiterhin einen zweiten zeitsensitiven Feldbus auf, aufweisend ein zweites Teilnehmergerät und eine eigene zweite Zeitdomäne, wobei die zweite Zeitdomäne zweite Zeitschlitze zur Übertragung zeitsensitiver Daten beinhaltet. Des Weiteren umfasst das System mindestens ein Gateway, das den ersten und zweiten Feldbus zur Datenübertragung miteinander verbindet, wobei das Gateway Mittel aufweist, zum Bestimmen einer ersten Zykluszeitdauer der ersten Zeitdomäne und einer zweiten Zykluszeitdauer der zweiten Zeitdomäne zu einem Referenzzeitpunkt. Das Gateway weist weiterhin Mittel auf zum Bestimmen eines Zeitversatzes zwischen der ersten Zeitdomäne und der zweiten Zeitdomäne zu dem Referenzzeitpunkt. Das System ist beispielsweise dazu eingerichtet, die Schritte (z.B., alle Schritte) des oben beschriebenen Verfahrens auszuführen.

Ein weiterer Aspekt der Erfindung betrifft ein Gateway zur Vernetzung mindestens zweier zeitsensitiver Feldbusse mit unterschiedlichen Zeitdomänen. Das Gateway weist Mittel auf zum Bestimmen einer ersten Zykluszeitdauer einer ersten Zeitdomäne, und einer zweiten Zykluszeitdauer einer zweiten Zeitdomäne zu einem Referenzzeitpunkt. Des Weiteren weist das Gateway Mittel auf zum Bestimmen eines Zeitversatzes zwischen der ersten Zeitdomäne und der zweiten Zeitdomäne zu dem Referenzzeitpunkt. Ausführungsformen des Gateways weisen weiterhin Mittel zum Ausführen der (bzw. jeweder) Verfahrensschritte beim oben beschriebenen Verfahren auf, die durch das dort genannte Gateway ausgeführt werden.

Weitere Ausführungsformen der Erfindung ergeben sich aus den Unteransprüchen.

### Kurze Beschreibung der Zeichnungen

In der folgenden detaillierten Beschreibung werden Aspekte der Erfindung unter Bezugnahme auf die Zeichnungen beschrieben, wobei
- Fig. 1: ein Blockschaltbild eines Systems mit einem ersten zeitsensitiven Feldbus und mit einem zweiten zeitsensitiven Feldbus darstellt;
- Fig. 2: schematisch ein Zeitdiagramm eines ersten und zweiten Feldbusses sowie die Übertragung nicht-zeitsensitiver Daten durch das Gateway darstellt;
- Fig. 3: schematisch ein detailliertes Zeitdiagramm der für einen ersten und zweiten Feldbus definierten Zykluszeiten darstellt; und
- Fig. 4: schematisch ein Zeitdiagramm eines ersten und zweiten Feldbusses sowie die Übertragung zeitsensitiver Daten durch das Gateway darstellt.

### Detaillierte Beschreibung

Die folgende detaillierte Beschreibung erläutert Ausführungsbeispiele der Erfindung anhand der oben genannten Figuren. Hierbei beschreiben gleiche Referenzzeichen in verschiedenen Figuren jeweils die gleiche Vorrichtung, den gleichen Verfahrensschritt bzw. die gleiche Zeiteinheit, usw.

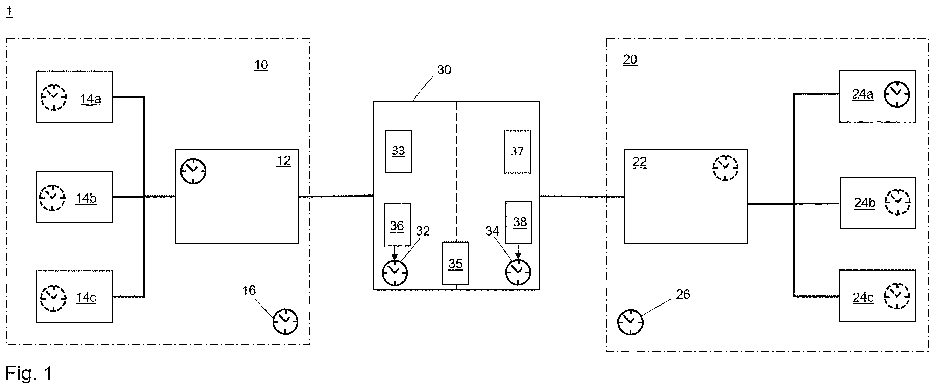

Fig. 1 zeigt ein Blockschaltbild eines exemplarischen Systems 1 mit einem ersten zeitsensitiven Feldbus 10 und einem zweiten zeitsensitiven Feldbus 20. Der erste Feldbus 10 und der zweite Feldbus 20 umfassen exemplarisch die Teilnehmergeräte 12, 14a-c, bzw. 22, 24a-c, wobei die Teilnehmergeräte 12, 22 jeweils Controller des Feldbusses, beispielsweise ein Automatisierungsgerät, eine Speicher-programmierbare-Steuerung, SPS, ein Knoten oder eine andere industrielle Steuerung sind und die Teilnehmergeräte 14a-c, bzw. 24a-c Feldgeräte, beispielsweise E/A-Bausteine für Sensoren und/oder Aktoren sind, die Größen eines durch den Feldbus automatisierten Prozesses messen bzw. beeinflussen können. Die Teilnehmergeräte 12, 14a-c, bzw. 22, 24a-c sind im jeweiligen Feldbus 10, 20 kommunikativ untereinander über eine Schnittstelle miteinander verbunden, wobei die Definition der Schnittstelle ein Schnittstellenprotokoll umfasst.

Die Teilnehmergeräte 12, 14a-c des ersten Feldbusses 10 gehören einer ersten Zeitdomäne 16 an, wobei alle Teilnehmergeräte 12, 14a-c dasselbe Verständnis einer absoluten Zeit aufweisen. Hierzu weist jedes Teilnehmergerät 12, 14a-c jeweils einen Zeitgeber auf, der in Fig. 1 schematisch durch das Ziffernblatt einer Uhr symbolisiert ist. In entsprechender Weise gehören die Teilnehmergeräte 22, 24a-c des zweiten Feldbusses 20 einer zweiten Zeitdomäne 26 an. In den Feldbussen 10 und 20 sind die Feldbusleitungen ausgehend vom Controller 12, 22 sternförmig mit den Feldgeräten verbunden. Allgemein können Feldbusse auch durch andere Topologien, z.B. Baumtopologie, Bustopologie, Ringtopologie gebildet werden. Es ist auch möglich, dass die Teilnehmergeräte 12, 24a-c, bzw. 22, 24a-c eines Feldbusses 10, 20 wenigstens teilweise durch ein drahtloses Netzwerk miteinander verbunden sind.

Jeweils ein Teilnehmergerät 12, 24a-c, bzw. 22, 24a-c gibt für den jeweiligen Feldbus 10 bzw. 20 die Zeit vor und wird daher als Master bezeichnet. Beim ersten Feldbus 10 ist beispielsweise der Controller 12 der Master, was in Fig. 1 als Ziffernblatt mit durchgezogenen Linien dargestellt ist. Beim zweiten Feldbus 20 ist beispielsweise das Teilnehmergerät 24a der Feldbus-Master. Die Uhr eines Masters 12 bzw. 24a gibt dabei jeweils die Zeit im Feldbus vor, wobei sich die übrigen Teilnehmergeräte eines Feldbusses, d.h. Teilnehmergeräte 14a-c im ersten Feldbus bzw. Teilnehmergeräte 22, 24b-c ihre Zeit jeweils von dem Master ableiten. Dies geschieht beispielsweise, indem sich die Teilnehmer innerhalb eines Feldbusses Nachrichten in regelmäßigen oder unregelmäßigen Abständen nach dem Precision Time Protocol nach dem Standard IEEE 1588 austauschen, und so auf diese Weise ein gemeinsames Verständnis der Zeit erlangen und aufrechterhalten.

Innerhalb des ersten Feldbusses 10 und des zweiten Feldbusses 20 können jeweils nicht-zeitsensitive als auch zeitsensitive Daten übertragen werden, wie im Folgenden noch genauer beschrieben werden wird. Beispielsweise kann die Datenübertragung in beiden Feldbussen gemäß den IEEE 802.1Q-Standards in Übertragungszyklen eingeteilt werden, wobei im ersten Feldbus 10 erste Zeitschlitze und im zweiten Feldbus 20 zweite Zeitschlitze definiert werden, in denen eine Übertragung von Echtzeit-Daten zwischen zwei Teilnehmergeräten jeweils desselben Feldbusses möglich ist. Die Übertragung von Echtzeit-Daten kann eine getaktete Ende-zu-Ende Übertragung zwischen zwei Teilnehmergeräten sein, oder eine Übertragung mit geringen Verzögerungen, die insoweit bekannt, deterministisch oder kausal beherrschbar sind, dass sie Echtzeit-Anforderungen genügen.

Für die Definition der Übertragungszyklen und der Zeitschlitze für die Übertragung zeitsensitiver Daten können ein oder mehrere Teilnehmergeräte des jeweiligen Feldbusses jeweils eine Scheduler-Funktion aufweisen. Der Scheduler ist dafür zuständig, die Zykluszeitdauern im ersten bzw. im zweiten Feldbus zu definieren und diese an die anderen Teilnehmergeräte des jeweiligen Feldbusses zu kommunizieren. Des Weiteren kann ein Scheduler dazu eingerichtet sein, Anfragen bezüglich der Übertragung zeitsensitiver Daten im ersten bzw. im zweiten Feldbus entgegenzunehmen, vergebene Zeitschlitze zu verwalten, eine Kommunikation mit einem anfragenden Teilnehmergerät zur Aushandlung von Zeitschlitzen zur zeitsensitiven Übertragung zu führen, und die Anfragen entsprechend zu bestätigen oder abzulehnen. Der Scheduler kann des Weiteren dazu eingerichtet sein, vergebene Zeitschlitze zur Übertragung zeitsensitiver Daten an die anderen Teilnehmergeräte kommunizieren. Im Folgenden soll angenommen werden, dass im ersten Feldbus 10 mindestens eines der Teilnehmergeräte 12, 24a-c als Scheduler fungieren kann, und die entsprechenden Protokolle (z.B. gemäß dem IEEE 802.1Q-Standard) durchführt. Ebenso wird angenommen, dass im zweiten Feldbus 20 mindestens eines der Teilnehmergeräte 22, 24a-c eine Scheduler-Funktion wahrnimmt.

Das System 1 umfasst weiterhin ein Gateway 30, über welches beide Feldbusse 10, 20 miteinander kommunikativ verbunden sind. Zwar zeigt Fig. 1, dass die Feldbusse 10, 20 über ihre Controller 12 und 22 miteinander verbunden sind. Dies ist jedoch nicht zwingend. Vielmehr hat das Gateway 30 eine Schnittstelle zu jedem der Feldbusse 10 und 20, so dass es in Bezug auf den jeweiligen Feldbus 10, 20 ein Teilnehmergerät darstellt. Das Gateway 30 unterstützt hierbei mindestens zwei Zeitdomänen 32 und 34. Weitere Zeitdomänen können gemäß der Anzahl anzukoppelnder Feldbusse unterstützt werden. Insbesondere umfasst das Gateway Zeitgeber 36 und 38, die für die erste 16 bzw. für die zweite Zeitdomäne 26 konfiguriert werden können.

Das Gateway 30 enthält weiterhin Zeit-Umrechnungseinheiten 33 und 37. Die Zeit-Umrechnungseinheiten können dabei so konfiguriert werden, dass sie als "Dolmetscher" zwischen verschiedenen Zeitdomänen fungieren. Beispielsweise kann die Zeit-Umrechnungseinheit 33 dazu eingerichtet sein, Zeitangaben (d.h. Angaben bezüglich Zeitpunkten und/oder Zeitintervallen), die sich auf die durch das Gateway 30 unterstützte Zeitdomäne 34 beziehen, zu empfangen und in entsprechende Zeitangaben der Zeitdomäne 32 zu konvertieren. In umgekehrter Richtung kann die Zeit-Umrechnungseinheit 33 dazu eingerichtet sein, Zeitangaben aus der Zeitdomäne 32 in solche der Zeitdomäne 34 zu konvertieren und auszugeben. Zur Konvertierung kann die Zeit-Umrechnungseinheit 33 sie beispielsweise einen Zeitversatz zwischen dem Zeitgeber 38 und 36 zu einem Referenzzeitpunkt bestimmen und bei der Konvertierung entsprechend berücksichtigen. In entsprechender Weise kann die Zeit-Umrechnungseinheit 37 dazu eingerichtet sein, Zeitangaben, die sich auf die durch das Gateway unterstützte Zeitdomäne 32 beziehen, zu empfangen und in entsprechende Zeitangaben der Zeitdomäne 34 zu konvertieren bzw. in umgekehrter Richtung Zeitangaben der Zeitdomäne 34 als solche der Zeitdomäne 32 zu konvertieren und auszugeben.

Das Gateway 30 kann den ersten Feldbus 10 und den zweiten Feldbus 20 zur Datenübertragung miteinander verbinden. Hierzu unterhält das Gateway 30 einen Speicher 35 zum Puffern bzw. zum Zwischenspeichern von Daten. Beispielsweise können im Speicher 35 nicht-zeitsensitive Daten abgelegt werden. Das Gateway 30 kann aber auch eine Übertragung zeitsensitiver Daten zwischen dem ersten und zweiten Feldbus 10, 20 während definierter Zeitschlitze durchleiten. Zum Definieren bzw. Aushandeln derartiger Zeitschlitze können die Zeit-Umrechnungseinheiten 33 bzw. 37 verwendet werden. Beispielsweise kann die Zeit-Umrechnungseinheit 33 dazu eingerichtet sein, eine Umrechnung von Zeitangaben bezüglich der ersten Zeitdomäne 16 vorzunehmen indem sie mit Teilnehmergeräten des zweiten Feldbusses 20 kommuniziert, und dabei Zeitangaben entsprechend der zweiten Zeitdomäne entgegennimmt bzw. ausgibt. In entsprechender Weise kann die Zeit-Umrechnungseinheit 37 mit Teilnehmergeräten des ersten Feldbusses 10 kommunizieren, um Zeitangaben bezüglich der ersten Zeitdomäne 16 entgegenzunehmen bzw. auszugeben und diese bezüglich der zweiten Zeitdomäne 26 zu konvertieren.

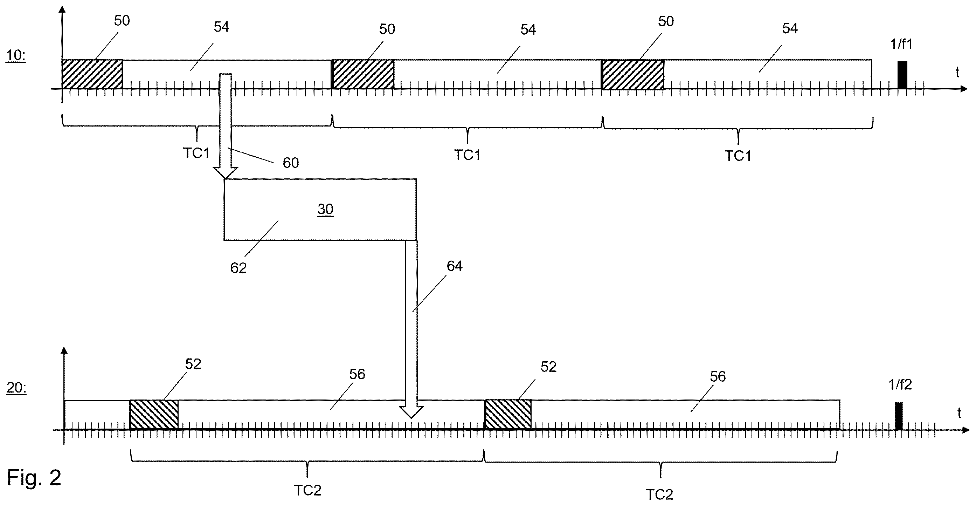

Fig. 2 zeigt ein exemplarisches Zeitdiagramm des ersten Feldbusses 10 und des zweiten Feldbusses 20. Hierbei weist der erste Feldbus 10 Kommunikations- bzw. Übertragungszyklen mit periodisch wiederkehrenden Zyklusintervallen TC1 auf, die nach Lage und Dauer gemäß dem in Fig. 2 oberen Zeitstrahl definiert sind. Entsprechend weist der zweite Feldbus 20 Kommunikationszyklen mit periodisch wiederkehrenden Zyklusintervallen TC2 auf, die nach Lage und Dauer gemäß dem in Fig. 2 unteren Zeitstrahl definiert sind. In Fig. 2 ist der Kehrwert der Taktfrequenzen 1/f1 bzw. 1/f2, nämlich die Taktzyklus-Dauer jeweils durch einen schwarzen Balken veranschaulicht. Selbst wenn beide Taktfrequenzen f1 und f2 nominell (d.h. gemäß einer Spezifikation) die gleichen Frequenzen aufweisen, so ist es möglich, dass die Uhren der Zeitdomänen 16 bzw. 26 der beiden Feldbusse unterschiedlich schnell laufen, wenn die tatsächlichen Werte der Taktfrequenzen f1 und f2 sich geringfügig unterscheiden.

In den Feldbussen 10, 20 können erste Zeitschlitze 50 bzw. zweite Zeitschlitze 52 zur Übertragung zeitsensitiver Daten innerhalb des jeweiligen Feldbusses 10, 20 definiert, verhandelt oder ermittelt werden. Hierzu kann beispielsweise eines der Teilnehmergeräte 12, 14a-c im ersten Feldbus 10 sowie eines der Teilnehmergeräte 22, 24a-c im zweiten Feldbus 20 als Echtzeit-unterstützender Scheduler (time-aware scheduler) gemäß dem Standard IEEE 802.1QBv konfiguriert sein. Lediglich exemplarisch fallen die ersten Zeitschlitze 50 und die zweiten Zeitschlitze 52 mit dem Anfang der entsprechenden Kommunikationszyklen zusammen. Allgemein können die Zeitschlitze 50, 52 zur zeitsensitiven Übertragung an jeglicher Position innerhalb eines Übertragungszyklus liegen. Es ist auch möglich, pro Übertragungszyklus mehrere getrennte Zeitschlitze 50, 52 für eine zeitsensitive Kommunikation zu definieren.

Fig. 2 zeigt weiterhin Zeitspannen 54 und 56, die zu den jeweiligen Übertragungszyklen gehören, die außerhalb der zur Übertragung zeitsensitiver Daten reservierten Zeitschlitze 50 bzw. 52 liegen. In diesen Intervallen 54, 56 können innerhalb der Feldbusse 10, 20 nicht-zeitsensitive Daten beispielsweise nach dem Ethernet-Protokoll übertragen werden, für die das CSMA/CD (Carrier Sense Multiple Access with Collision Detection) Zugriffsverfahren gilt.

Zur Anbindung des Gateways 30 werden in einem Ausführungsbeispiel zunächst die Zeitgeber 36 und 38 des Gateways 30 als Slave in Bezug auf die Zeitdomänen 16, 26 der Feldbusse 10 und 20 synchronisiert. Hierdurch hat das Gateway eine synchronisierte Schnittstelle als Teilnehmergerät sowohl zum ersten 10 als auch zum zweiten Feldbus 20. Somit sind seitens des Gateways 30 auch die entsprechenden Zykluszeitdauern TC1 und TC2, die zeitliche Lage der Kommunikationszyklen sowie die Zeitschlitze 50 und 52 bekannt, in denen in den jeweiligen Feldbussen 10, 20 zeitsensitive Kommunikation abgewickelt wird.

Damit wird es möglich, zunächst nicht-zeitsensitive Daten auch zwischen den Feldbussen auszutauschen. Eine derartige Übertragung kann beispielsweise dadurch erfolgen, dass vom ersten Feldbus 10 nicht-zeitsensitive Daten 60 während eines ersten nicht-zeitsensitiven Intervalls 54 an das Gateway 30 übertragen werden, wie in Fig. 2 durch den Pfeil 60 symbolisiert. Diese Daten 60 können in dem Zwischenspeicher 35 des Gateways 30 zwischengespeichert werden, wie durch den Schritt 62 symbolisiert. Schließlich können die zwischengespeicherten Daten vom Gateway 30 auf den zweiten Feldbus 20 während Intervallen 56 außerhalb der zweiten Zeitschlitze 52 übertragen werden, wie durch den Pfeil 64 symbolisiert. Beispielsweise muss das Gateway 30 zum Aussenden der Daten 64 auf den zweiten Feldbus mittels des CSMA/CD-Verfahrens oder einem anderen Bewerbungsverfahren (engl. contention) sicherstellen, dass der zweite Feldbus 20 während der Zeitschlitze 56 zur Übertragung frei ist.

Ein Austausch nicht-zeitsensitiver Daten 60, 64 zwischen den Feldbussen kann dazu verwendet werden, eine Frequenzsynchronisation der ersten Zeitdomäne (16) und der zweiten Zeitdomäne (26) zu unterstützen. Durch eine derartige Synchronisation der Zeitgeber-Taktfrequenzen bleibt der Zeitversatz zwischen den Zeiten beider Zeitdomänen 16, 26 stabil, wodurch das Bestimmen von Zeitpunkten im Gateway 30 bzw. in den Teilnehmergeräten 12, 14a-c bzw. 22, 24a-c des ersten und zweiten Feldbusses in Bezug auf die jeweils andere Zeitdomäne 16, 26 vereinfacht wird. Hierzu soll exemplarisch das folgende Verfahren zur Synchronisation der Taktfrequenzen f1 und f2 der Zeitgeber 36 und 38 beschrieben werden. In einer Ausführungsform sind die Taktgeber 36, 38 des Gateways 30 zunächst als Slave der ersten 16 bzw. zweiten 26 Zeitdomäne synchronisiert und haben die gleiche nominale Frequenz. Eine Frequenzsynchronisation kann nun dadurch erfolgen, dass der erste Zeitgeber 36 des Gateways 30 als Master für den ersten Feldbus 10 bestimmt wird, so dass das Gateway 30 über die Zeitsetzung im ersten Feldbus bestimmen kann. Weiterhin kann eine Synchronisation der Frequenz f1 des ersten Zeitgebers 36 des Gateways 30 auf die Frequenz f2 der zweiten Zeitdomäne 26 erfolgen. Eine Synchronisation ausschließlich der Frequenzen f1 und f2 in den Zeitdomänen 16, 26 kann Zeitsprünge der Teilnehmergeräte im ersten Feldbus 10 vermeiden. Die Synchronisation der Frequenzen kann dabei im laufenden Betrieb des ersten Feldbusses 10 über eine Anpasszeitdauer erfolgen, die lang genug gewählt wird, so dass die Prozesse des ersten Feldbusses 10 störungsfrei ablaufen können.

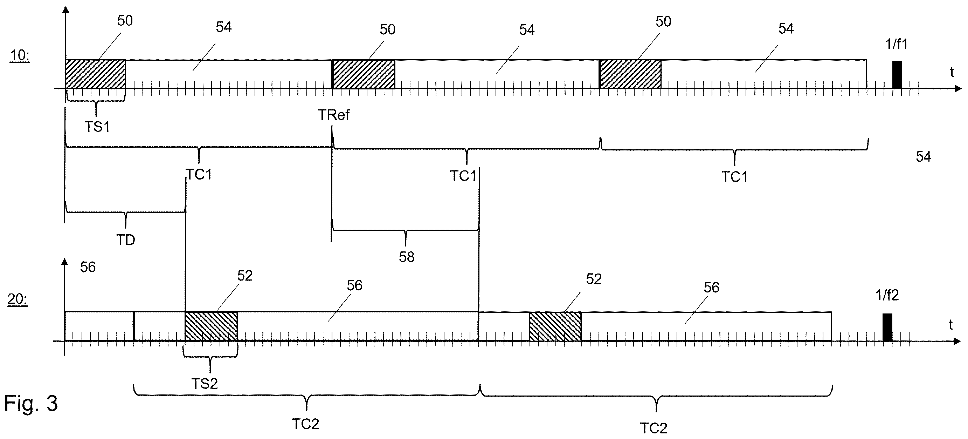

Fig. 3 zeigt schematisch ein detailliertes Zeitdiagramm der für den ersten und zweiten Feldbus 10, 20 definierten Zykluszeiten gemäß einiger Aspekte der Erfindung. In einem Beispiel können die Taktgeber in den Teilnehmergeräten der Feldbusse 10 und 20 beispielsweise nach dem oben beschriebenen Verfahren die gleichen Taktfrequenzen f1= f2 aufweisen. In Fig. 3 ist der Kehrwert der Taktfrequenzen 1/f1 bzw. 1/f2, nämlich die Taktzyklus-Dauer jeweils durch einen schwarzen Balken veranschaulicht.

In dem vorliegenden Beispiel sind nur die Taktfrequenzen zwischen dem ersten und zweiten Feldbus 10,20 synchronisiert. Daher kann zwischen den Anfangszeitpunkten der Kommunikationszyklen ein Zeitversatz 58 auftreten. Ein derartiger Zeitversatz 58 ergibt sich einmal wegen der unterschiedlichen Definition der Zeit in beiden Feldbussen 10, 20, zum anderen auch aus der Differenz zwischen den Startzeitpunkten der Kommunikationszyklen des ersten 10 und zweiten Feldbusses 20, selbst wenn beide Feldbusse das gleiche Verständnis der Zeit aufweisen würden. Weiterhin können die Kommunikationszyklen unterschiedliche Dauern TC1 und TC2 aufweisen. Daher kann allgemeinhin der Zeitversatz 58 nur in Bezug auf einen (absoluten) Referenzzeitpunkt TRef definiert werden. Der absolute Referenzzeitpunkt TRef kann dabei sowohl in der Zeit des ersten Feldbusses 10 als auch in der Zeit des zweiten Feldbusses 20 entsprechend ausgedrückt werden. Stehen die Zeitdauern TC1 und TC2 in einem rationalen Verhältnis zueinander, so kehrt ein bestimmter Zeitversatz 58 nach einer vorhersagbaren Anzahl von Zyklen des ersten bzw. des zweiten Feldbusses wieder. Beträgt beispielsweise die Zykluszeitdauer TC1 im ersten Feldbus 50 ms und die Zykluszeitdauer TC2 im zweiten Feldbus 25 ms, so kann der Zeitversatz 58 beispielsweise nach einem ersten Zyklus im zweiten Feldbus Null betragen, nach einem zweiten Zyklus im zweiten Feldbus 25 ms gegenüber dem ersten Feldbus, und dann wieder Null usw. Ist der Zeitversatz 58 jedoch zu einem Zeitpunkt TRef bekannt, so ist es möglich, für alle Kommunikationszyklen des ersten und zweiten Feldbusses den Zeitversatz 58 im Voraus zu bestimmen, selbst wenn die Zykluszeitdauern TC1 und TC2 nicht in einem rationalen Verhältnis zueinander stehen.

Auf den Feldbussen 10 und 20 können des Weiteren unterschiedliche Dauern TS1 und TS2 der ersten und zweiten Zeitschlitze 50 bzw. 52 für die zeitsensitive Kommunikation auftreten, da diese für beide Feldbusse 10 und 20 unabhängig voneinander vereinbart werden können. Des Weiteren können die ersten und zweiten Zeitschlitze 50 bzw. 52 zeitliche Unterschiede TD in den Startzeiten aufweisen. Diese lassen sich im Allgemeinen wiederum nur in Bezug auf einen absoluten Referenzzeitpunkt TRef vorhersagbar bestimmen, da Startzeiten der Zeitschlitze 50 und 52 für die zeitsensitive Kommunikation mit den Zykluszeiten in den einzelnen Feldbussen variieren können.

Nach erfolgter Frequenzsynchronisation kann das Gateway 30 die Zykluszeitdauern TC1 und TC2 im ersten und zweiten Feldbus 10, 20 zu einem Referenzzeitpunkt TRef bestimmen. Des Weiteren kann das Gateway 30 den Zeitversatz 58 zwischen der ersten und zweiten Zeitdomäne 16, 26 zu dem Referenzzeitpunkt TRef bestimmen. Das Gateway 30 kann weiterhin die Zykluszeitdauer TC1 der ersten Zeitdomäne 16 an den zweiten Feldbus 20 kommunizieren sowie die Zykluszeitdauer TC2 der zweiten Zeitdomäne 26 an den ersten Feldbus 10 kommunizieren. Dies kann in Bezug auf den Referenzzeitpunkt TRef erfolgen. Auf diese Weise können bestimmte Teilnehmergeräte des ersten bzw. des zweiten Feldbusses 10, 20 die Kommunikationszyklen des jeweils anderen Feldbusses 20, 10 vorhersagbar bestimmen.

Das Gateway 30 kann jedoch zur Einrichtung von überlappenden ersten und zweiten Zeitschlitz im ersten bzw. zweiten Feldbus für die Kommunikation zeitsensitiver Daten eine Konvertierung von Zeitangaben (d.h. Zeitpunkte und/oder -intervalle) vornehmen, derart, dass im ersten Feldbus 10 und im zweiten Feldbus 20 keine eigenen Umrechnungen vorgenommen werden brauchen. Hierzu ist das Gateway 30 wie oben beschrieben, mittels der Zeit-Umrechnungseinheiten 33 und 37 dazu eingerichtet, auf die erste Zeitdomäne 16 des ersten Feldbusses 10 bezogene Zeitangaben in solche der zweiten Zeitdomäne 26 des zweiten Feldbusses 20 unter Berücksichtigung des Zeitversatzes 58 zu dem Referenzzeitpunkt TRef und umgekehrt zu konvertieren.

In einer Ausführungsform kann die Zeit-Umrechnungseinheit 33 optional weiterhin dazu eingerichtet sein, für den zweiten Feldbus 20 als Scheduler-Proxy zu fungieren, der Zeitschlitze zur zeitkritischen Kommunikation mit dem ersten Feldbus aushandeln oder bestimmen kann. In dieser Funktion hat die Zeit-Umrechnungseinheit 33 eine Schnittstelle für die Einrichtung von Zeitschlitzen im ersten Feldbus zur zeitsensitiven Kommunikation, beispielsweise nach den durch den IEEE802.1QBv-Standard definierten Verfahren. Hierbei können die Teilnehmergeräte 22, 24a-c des zweiten Feldbusses 20 die Zeit-Umrechnungseinheit 33 wie einen Scheduler im eigenen Feldbus ansprechen, d.h. entsprechende Protokoll-Nachrichten zur Einrichtung von Zeitschlitzen für die zeitsensitive Kommunikation an die Zeit-Umrechnungseinheit 33 schicken und von dieser erhalten, obwohl zur Einrichtung von Zeitschlitzen im ersten Feldbus 10 ein als Scheduler eingerichtetes Teilnehmergerät (beispielsweise der Controller 12) im ersten Feldbus 10 zuständig ist.

In einem Beispiel soll eine Übertragung zeitkritischer Daten von dem Teilnehmergerät 14c im ersten Feldbus 10 an das Teilnehmergerät 24b im zweiten Feldbus 20 erfolgen. Hierzu ist dem Teilnehmergerät 24b die als Scheduler-Proxy eingerichtete Zeit-Umrechnungseinheit 33 bekannt, an die es gemäß einem Aushandlungsprotokoll (z.B. als Scheduler gemäß IEEE802.1Q oder einem anderen Standard) eine Anforderung sendet, die Zeitangaben (d.h. Zeitpunkte und/oder Intervalle) bezüglich möglicher Zeitschlitze 52 in Bezug auf die Zeitdomäne 26 des zweiten Feldbusses 20 enthält.

Bei Empfang der Anforderung bestimmt die Zeit-Umrechnungseinheit 33 des Gateways 30 die entsprechenden Zeitangaben zu den Zeitschlitzen 52 in Bezug auf die Zeitdomäne 16 des ersten Feldbusses 10. Diese Bestimmung erfolgt unter Berücksichtigung des Zeitversatzes 58 mit Bezug auf den Referenzzeitpunkt TRef. Die Zeit-Umrechnungseinheit 33 reicht die Anforderung weiter an den beispielhaft im Feldbus 10 als Scheduler fungierenden Controller 12. Die weitergereichte Anforderung enthält die auf die Zeitdomäne 16 des ersten Feldbusses 10 bezogenen Zeitangaben.

Der Controller 12 gleicht die vorgeschlagenen Zeitangaben mit den von ihm verwalteten Zeitschlitzen ab, beispielsweise unter Berücksichtigung der im Feldbus 10 geltenden Zykluszeitdauer TC1 ab, bestimmt einen oder mehrere Zeitschlitze 52 zur Übertragung zeitsensitiver Daten, und richtet diese durch entsprechende Kommunikation mit dem Teilnehmergerät 14c innerhalb des Feldbusses 10 ein. Des Weiteren sendet der Controller 12 eine Bestätigungsnachricht an die Zeit-Umrechnungseinheit 33 des Gateways 30, welche die Zeitangaben zu dem/den Zeitschlitzen 52 enthält. Letztere Zeitangaben gelten hierbei mit Bezug auf die Zeitdomäne 16 des ersten Feldbusses.

Die Zeit-Umrechnungseinheit 33 konvertiert die Zeitangaben in das Zeitregime des zweiten Feldbusses 20 und gibt diese an das Teilnehmergerät 24b im zweiten Feldbus 20 aus. Letzteres Teilnehmergerät kann den/die Zeitschlitze 52 mit Bezug auf die eigene Zeitdomäne 26 einrichten.

Durch die Funktion der Zeit-Umrechnungseinheit 33 können die Teilnehmergeräte in beiden Zeitdomänen ihre Zeitangaben jeweils mit Bezug auf ihre eigene zugeordnete Zeitdomäne bestimmen und benötigen keine interne Umrechnung, z.B. auf der Ebene der Anwendungsprogramme. Das beschriebene Anfrageprotokoll soll dabei lediglich beispielhaft sein. Weitere Varianten eines Protokolls zur Einrichtung von Zeitschlitzen zur zeitsensitiven Kommunikation sind möglich, wobei die Kommunikation von Zeitangaben mit der Zeit-Umrechnungseinheit 33 stets mit Bezug auf die Zeitdomäne des jeweiligen Feldbusses kommunizierbar ist. In entsprechender Weise steht die Zeit-Umrechnungseinheit 37 für Anfragen oder Anforderungen nach Zeitschlitzen zur Übertragung zeitsensitiver Daten des ersten Feldbusses 10 an den zweiten Feldbus 20 zur Verfügung.

Da das Gateway 30 bezüglich des ersten Feldbusses 10 und bezüglich des zweiten Feldbusses 20 jeweils als Teilnehmergerät fungiert, kann in einigen Ausführungsformen die Scheduler-Funktionalität für einen oder beide Feldbusse 10 bzw. 20 auch durch das Gateway 30 übernommen werden. Beispielsweise kann die Zeit-Umrechnungseinheit 33 ebenfalls eine Scheduler-Funktionalität für den ersten Feldbus 10 übernehmen (anstelle des Controllers 12). Das Gateway 30 kann hierbei selbst Zeitschlitze zur Übertragung von zeitsensitiven Daten im ersten Feldbus 10 aushandeln, und konfigurieren, wobei die Kommunikation von Zeitangaben im ersten Feldbus 10 bezüglich der ersten Zeitdomäne, und die Kommunikation von Zeitangaben im zweiten Feldbus 20 bezüglich der zweiten Zeitdomäne erfolgen kann.

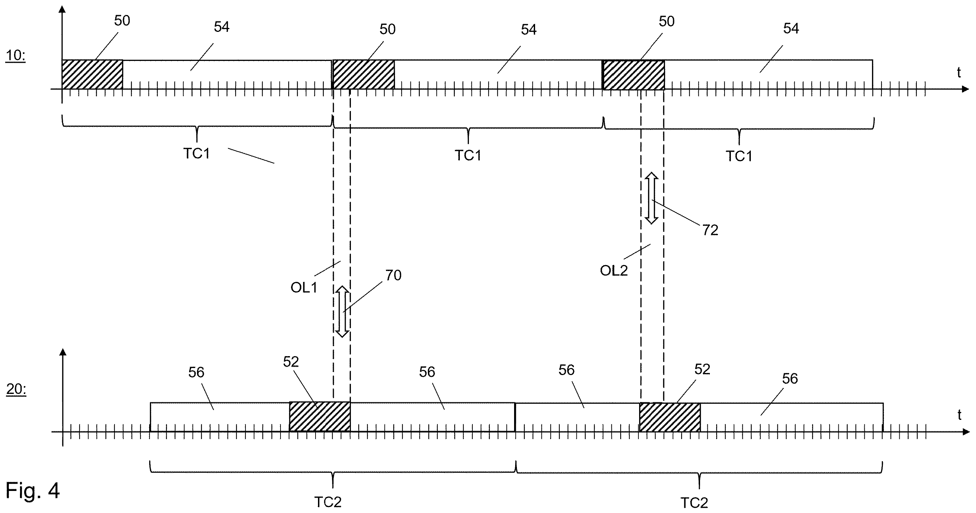

Fig. 4 zeigt schematisch ein Zeitdiagramm eines ersten 10 und eines zweiten Feldbusses 20 bei einer Übertragung zeitsensitiver Daten. Vorliegend wurden beispielsweise gemäß dem oben beschriebenen Protokoll oder einem vergleichbaren Protokoll im ersten Feldbus 10 Zeitschlitze 50 sowie im zweiten Feldbusses 20 Zeitschlitze 52 zur Übertragung von zeitsensitiven Daten vom für das Teilnehmergerät 14c zum Teilnehmergerät 24b vereinbart, die sich zumindest teilweise überlappen. Insbesondere haben entsprechende Teilnehmergeräte des ersten und zweiten Feldbusses gemeinsame Überlappungsbereiche OL1 und OL2 in den Zeitschlitzen 50 bzw. 52 vereinbart und diese Informationen über das Gateway 30 ausgetauscht (beispielsweise über die Zeit-Umrechnungseinheit 33), so dass diese auch dem Gateway 30 bekannt sind.

In einer Ausführungsform ist es nicht notwendig, in jedem Zyklus TC1 bzw. TC2 des ersten bzw. des zweiten Feldbusses 10, 20 einen Überlappungsbereich OL1, OL2 für die zeitsensitive Kommunikation zu schaffen. Beispielsweise kann es genügen, während jedes zweiten, dritten, usw. Zyklus des ersten bzw. des zweiten Feldbusses 10, 20 einen Überlappungsbereich zu definieren.

Sind während der Kommunikationszyklen des ersten und zweiten Feldbusses 10, 20 die ersten und zweiten Zeitschlitze 50 bzw. 52 bekannt, die für eine zeitsensitive Kommunikation innerhalb der Feldbusse reserviert sind, so können die Überlappungsbereiche OL1 und OL2 für eine zeitsensitive Kommunikation zwischen den Feldbussen regelbasiert bestimmt bzw. berechnet werden. Dann genügt es, zu einem Referenzzeitpunkt TRef ein einziges Paar überlappender Zeitschlitze 50 und 52 zu bestimmen. Die Reservierung der Zeitschlitze 50 bzw. 52 kann dabei durch als Scheduler fungierende Teilnehmergeräte in dem ersten bzw. zweiten Feldbus vorgenommen werden. In einer Ausführungsform können die Zeit-Umrechnungseinheiten 33 bzw. 37 des Gateways 30 die Zeitangaben der ersten und zweiten Zeitschlitze 50 und 52 jeweils bezüglich der Feldbus-eigenen Zeitdomäne zur Verfügung stellen. Die Bestimmung der Überlappungsbereiche OL1 und OL2 kann damit auch jeweils bezüglich der Feldbus-eigenen Zeitdomäne erfolgen.

Stehen die Zykluszeitdauern TC1 und TC2 in einem rationalen Verhältnis zueinander, so ergeben sich regelmäßig wiederkehrende Überlappungsbereiche OL1 und OL2. In diesem Fall erleichtert sich das Aushandeln und/oder Bestimmen der Zeitschlitze 50 und 52, so dass in diesen Fällen ein Überlappungsbereich OL1, OL2 regelmäßig wiederkehrt und daher nicht einzeln ausgehandelt oder bestimmt werden muss.

In einem Ausführungsbeispiel ist das Gateway 30 weiterhin dazu eingerichtet, während der zeitlich überlappenden Zeitschlitze, z.B. OL1 bzw. OL2 zeitkritische Daten 70, 72 zu übertragen. In einer Ausführungsform erfolgt dies dadurch, dass das Gateway 30 die zwischen dem ersten und dem zweiten Feldbus 10, 20 ermittelten Zeitschlitze für zeitsensitiver Übertragung 50 und 52 und insbesondere die jeweiligen Überlappungsintervalle OL1, OL2 ermittelt und die Signale zwischen dem ersten und zweiten Feldbus während dieser Intervalle durchleitet.

Durch das beschriebene Verfahren, System 1 und den Gateway 30 ist es möglich, zeitsensitive Feldbusse 10, 20 miteinander zu vernetzen, ohne dass eine Angleichung der Feldbuszeiten sowie der Kommunikationszyklen der Feldbusse vorgenommen werden muss. Dadurch können insbesondere bestehende und zum Teil miteinander inkompatible Feldbusse sowohl zum Austausch nicht-zeitsensitiver als auch zum Austausch zeitsensitiver Daten eingerichtet werden.

## Patentansprüche

1. Verfahren zur Vernetzung eines ersten zeitsensitiven Feldbusses (10) mit einem zweiten zeitsensitiven Feldbus (20), wobei der erste zeitsensitive Feldbus (10) ein erstes Teilnehmergerät (12, 14) umfasst und eine eigene erste Zeitdomäne (16) aufweist, und wobei der zweite zeitsensitive Feldbus (20) ein zweites Teilnehmergerät (22, 24) umfasst und eine eigene zweite Zeitdomäne (26) aufweist, wobei die erste Zeitdomäne (16) und die zweite Zeitdomäne (26) frequenzsynchronisiert sind, wobei der erste und der zweite Feldbus (10, 20) mittels eines Gateways (30) zur Datenübertragung miteinander verbunden sind, wobei das Verfahren die folgenden Schritte aufweist:
- Bestimmen einer ersten Zykluszeitdauer (TC1) der ersten Zeitdomäne (16) und einer zweiten Zykluszeitdauer (TC2) der zweiten Zeitdomäne (26) durch das Gateway (30) zu einem Referenzzeitpunkt (TRef); und
- Bestimmen eines Zeitversatzes (58) zwischen der ersten Zeitdomäne (16) und der zweiten Zeitdomäne (26) durch das Gateway (30) zu dem Referenzzeitpunkt (TRef).

2. Verfahren gemäß Anspruch 1, weiterhin umfassend den Schritt des Kommunizierens der ersten Zykluszeitdauer (TC1) der ersten Zeitdomäne (16) an den zweiten Feldbus (20) und des Kommunizierens der zweiten Zykluszeitdauer (TC2) der zweiten Zeitdomäne (26) an den ersten Feldbus (10) durch das Gateway (30).

3. Verfahren gemäß Anspruch 1 oder 2, wobei das Verfahren weiterhin die folgenden Schritte aufweist:
- Empfangen durch das Gateway (30) einer Anforderung des zweiten Teilnehmergeräts (22, 24) des zweiten Feldbusses (20) eines Zeitschlitzes (50) zur Übertragung von zeitsensitiven Daten vom ersten Feldbus (10) an den zweiten Feldbus (20);
- Weiterreichen durch das Gateway (30) der Anforderung an das erste Teilnehmergerät (12, 14) im ersten Feldbus (10);
- Empfangen durch das Gateway (30) einer Bestätigungsnachricht von dem ersten Teilnehmergerät (12, 14) des ersten Feldbusses (10); und
- Weiterreichen der Bestätigungsnachricht vom Gateway (30) an das zweite Teilnehmergerät (22,24) des zweiten Feldbusses (20).

4. Verfahren gemäß einem der Ansprüche 1 bis 3, wobei das Verfahren weiterhin den Schritt des Konvertierens durch das Gateway (30) aufweist, von Zeitpunkten oder Intervallen, welche sich auf die Zeitdomäne eines Feldbusses beziehen, in Zeitpunkte bzw. Intervalle, welche sich auf die Zeitdomäne des jeweils anderen Feldbusses beziehen.

5. Verfahren gemäß einem der Ansprüche 3 oder 4, wobei:
- die Anforderung des zweiten Teilnehmergeräts (22, 24) des zweiten Feldbusses (20) eines Zeitschlitzes (50) zur Übertragung von zeitsensitiven Daten eine Angabe von einem oder mehreren Zeitpunkten und/oder einem oder mehreren Zeitintervallen umfasst, die auf die Zeitdomäne (26) des zweiten Feldbusses (20) bezogen sind;
- das Verfahren weiterhin ein Bestimmen durch das Gateway (30) des einen oder der mehreren Zeitpunkte bzw. des einen oder der mehreren Zeitintervalle aus der Anforderung bezogen auf die Zeitdomäne (16) des ersten Feldbusses (10) umfasst, unter Berücksichtigung des Zeitversatzes (58) mit Bezug auf den Referenzzeitpunkt (TRef);
- wobei die weitergereichte Anforderung an das erste Teilnehmergerät (12, 14) im ersten Feldbus (10) die Angabe des einen oder der mehreren Zeitpunkte bzw. des einen oder mehreren Zeitintervalle bezogen auf die Zeitdomäne (16) des ersten Feldbusses (10) umfasst;
- wobei die Bestätigungsnachricht von dem ersten Teilnehmergerät (12, 14) des ersten Feldbusses (10) eine Angabe von einem oder mehreren Zeitpunkten und/oder einem oder mehreren Zeitintervallen umfasst, die auf die Zeitdomäne (16) des zweiten Feldbusses (10) bezogen sind;
- das Verfahren weiterhin das Bestimmen durch das Gateway (30) des einen oder der mehreren Zeitpunkte bzw. des einen oder der mehreren Zeitintervalle aus der Bestätigungsnachricht bezogen auf die Zeitdomäne (26) des zweiten Feldbusses (20) umfasst, unter Berücksichtigung des Zeitversatzes (58) mit Bezug auf den Referenzzeitpunkt (TRef); und
- wobei die weitergereichte Bestätigungsnachricht an das zweite Teilnehmergerät (22,24) des zweiten Feldbusses (20) die Angabe des einen oder der mehreren Zeitpunkte bzw. des einen oder mehreren Zeitintervalle bezogen auf die Zeitdomäne (16) des ersten Feldbusses (10) umfasst.

6. Verfahren gemäß einem der Ansprüche 1 bis 5, wobei das Verfahren weiterhin die folgenden Schritte aufweist:
- Setzen eines ersten Zeitschlitzes (50) zur Kommunikation zeitsensitiver Daten im ersten Feldbus (10) durch das erste Teilnehmergerät (12, 14) des ersten Feldbusses (10); und
- Setzen eines zweiten Zeitschlitzes (52) zur Kommunikation zeitsensitiver Daten im zweiten Feldbus (20) durch das zweite Teilnehmergerät (22, 24) des zweiten Feldbusses;
- wobei das Setzen jeweils derart erfolgt, dass sich der erste Zeitschlitz (50) des ersten Feldbusses (10) und der zweite Zeitschlitz (52) des zweiten Feldbusses (20) zeitlich überlappen (OL1, OL2).

7. Verfahren gemäß Anspruch 6, wobei das Verfahren weiterhin den folgenden Schritt aufweist:
Durchleiten von zeitsensitiven Daten vom zweiten Feldbus (20) auf den ersten Feldbus (10) oder umgekehrt durch das Gateway (30) während der Überlappung (OL1, OL2) des ersten Zeitschlitzes (50) und des zweiten Zeitschlitzes (52).

8. Verfahren gemäß Anspruch 6, wobei das Verfahren weiterhin die folgenden Schritte aufweist:
Übertragen von nicht-zeitsensitiven Daten, durch das Gateway (30), in Zeiten außerhalb des ersten Zeitschlitzes (50) des ersten Feldbusses (10) und außerhalb des zweiten Zeitschlitzes (52) des zweiten Feldbusses (20) zwischen dem ersten Feldbus (10) und dem zweiten Feldbus (20).

9. Verfahren gemäß einem der Ansprüche 1 bis 6, wobei zwischen der ersten Zeitdomäne (16) und der zweiten Zeitdomäne (26) gegeben ist:
- unterschiedliche Dauern (TS1, TS2) der ersten und zweiten Zeitschlitze (50, 52); und/oder
- zeitliche Unterschiede (TD) zwischen ersten und zweiten Zeitschlitzen (50, 52).

10. Verfahren gemäß einem der Ansprüche 1 bis 9, wobei das Gateway (30) einen ersten Zeitgeber (36) und einen zweiten Zeitgeber (38) aufweist, und das Verfahren zur Frequenzsynchronisation der beiden Feldbusse (10, 20) weiterhin die folgenden Schritte aufweist:
- Synchronisieren des ersten Zeitgebers (36) als Slave mit der ersten Zeitdomäne (16) des ersten Feldbusses (10);
- Synchronisieren des zweiten Zeitgebers (38) als Slave mit der zweiten Zeitdomäne (26) des zweiten Feldbusses (20);
- Synchronisieren zunächst ausschließlich der Frequenz des ersten Zeitgebers (36) als Slave mit Frequenz (f2) der zweiten Zeitdomäne (26) des zweiten Zeitgebers (38); und danach
- Setzen des ersten Zeitgebers (36) als Master für den ersten Feldbus (10), um die Frequenz (f1) des ersten Feldbusses (10) auf die Frequenz des ersten Zeitgebers (38) zu setzen.

11. Gateway (30) zur Vernetzung mindestens zweier zeitsensitiver Feldbusse (10, 20) mit unterschiedlichen Zeitdomänen (16, 26), wobei die unterschiedlichen Zeitdomänen frequenzsynchronisiert sind, aufweisend:
- Mittel zum Bestimmen einer ersten Zykluszeitdauer (TC1) der ersten Zeitdomäne (10) und einer zweiten Zykluszeitdauer (TC2) der zweiten Zeitdomäne (20) zu einem Referenzzeitpunkt (TRef); und
- Mittel zum Bestimmen eines Zeitversatzes (58) zwischen der ersten Zeitdomäne (16) und der zweiten Zeitdomäne (26) zu dem Referenzzeitpunkt (TRef).

12. Gateway gemäß Anspruch 11, weiterhin aufweisend:
- Mittel zum Kommunizieren der ersten Zykluszeitdauer (TC1) der ersten Zeitdomäne (16) an den zweiten Feldbus (20) und zum Kommunizieren der zweiten Zykluszeitdauer (TC2) der zweiten Zeitdomäne (26) an den ersten Feldbus (10).

13. Gateway gemäß einem der Ansprüche 11 oder 12, weiterhin aufweisend
- Mittel zum Empfangen einer Anforderung des zweiten Teilnehmergeräts (22, 24) des Feldbusses (20) eines Zeitschlitzes (50), zur Übertragung von zeitsensitiven Daten vom ersten Feldbus (10) auf den zweiten Feldbus (20);
- Mittel zum Weiterreichen der Anforderung an ein erstes Teilnehmergerät (12, 14) im ersten Feldbus (10);
- Mittel zum Empfangen einer Bestätigungsnachricht von dem ersten Teilnehmergerät (12, 14) des ersten Feldbusses (10); und
- Mittel zum Weiterreichen der Bestätigungsnachricht vom Gateway (30) an das zweite Teilnehmergerät (22, 24) des zweiten Feldbusses (20).

14. Gateway (30) gemäß einem der Ansprüche 11 bis 13, wobei das Gateway (30) weiterhin eingerichtet ist zum Konvertieren von Zeitpunkten oder Intervallen, welche sich auf die Zeitdomäne eines Feldbusses beziehen, in Zeitpunkte bzw. Intervalle, welche sich auf die Zeitdomäne des jeweils anderen Feldbusses beziehen.

15. Gateway gemäß einem der Ansprüche 13 oder 14, wobei:
- die Anforderung des zweiten Feldbusses (20) nach einem Zeitschlitz (50) zur Übertragung von zeitsensitiven Daten eine Angabe von einem oder mehreren Zeitpunkten und/oder einem oder mehreren Zeitintervallen umfasst, die auf die Zeitdomäne (26) des zweiten Feldbusses (20) bezogen sind;
- das Gateway (30) weiterhin Mittel aufweist zum Bestimmen des einen oder der mehreren Zeitpunkte bzw. des einen oder der mehreren Zeitintervalle aus der Anforderung bezogen auf die Zeitdomäne (16) des ersten Feldbusses (10), unter Berücksichtigung des Zeitversatzes (58) mit Bezug auf den Referenzzeitpunkt (TRef);
- wobei die weitergereichte Anforderung an das erste Teilnehmergerät (12, 14) im ersten Feldbus (10) die Angabe des einen oder der mehreren Zeitpunkte bzw. des einen oder mehreren Zeitintervalle bezogen auf die Zeitdomäne (16) des ersten Feldbusses (10) umfasst;
- wobei die Bestätigungsnachricht von dem ersten Teilnehmergerät (12, 14) des ersten Feldbusses (10) eine Angabe von einem oder mehreren Zeitpunkten und/oder einem oder mehreren Zeitintervallen umfasst, die auf die Zeitdomäne (16) des zweiten Feldbusses (10) bezogen sind;
- das Gateway (30) weiterhin Mittel aufweist zum Bestimmen des einen oder der mehreren Zeitpunkte bzw. des einen oder der mehreren Zeitintervalle aus der Bestätigungsnachricht bezogen auf die Zeitdomäne (26) des zweiten Feldbusses (20), unter Berücksichtigung des Zeitversatzes (58) mit Bezug auf den Referenzzeitpunkt (TRef); und
- wobei die weitergereichte Bestätigungsnachricht an den zweiten Feldbus (20) die Angabe des einen oder der mehreren Zeitpunkte bzw. des einen oder mehreren Zeitintervalle bezogen auf die Zeitdomäne (16) des ersten Feldbusses (10) umfasst.

16. Gateway gemäß einem der Ansprüche 13 bis 15, wobei das Gateway (30) Mittel aufweist, zum Durchleiten von zeitsensitiven Daten vom zweiten Feldbus (20) auf den ersten Feldbus (10) oder umgekehrt, während einer Überlappung (OL1, OL2) eines ersten Zeitschlitzes (50) des ersten Feldbusses (10) und eines zweiten Zeitschlitzes (52) des zweiten Feldbusses (20).

17. System (1) zur Vernetzung mindestens zweier zeitsensitiver Feldbusse (10, 20), aufweisend:
- ein erster zeitsensitiver Feldbus (10), aufweisend ein erstes Teilnehmergerät (12, 14) und eine eigene erste Zeitdomäne (16), wobei die erste Zeitdomäne (16) erste Zeitschlitze (50) zur Übertragung zeitsensitiver Daten beinhaltet;
- ein zweiter zeitsensitiver Feldbus (20), aufweisend ein zweites Teilnehmergerät (22, 24) und eine eigene zweite Zeitdomäne (26), wobei die zweite Zeitdomäne (26) zweite Zeitschlitze (52) zur Übertragung zeitsensitiver Daten beinhaltet; und
- mindestens ein Gateway (30), gemäß einem der Ansprüche 11 bis 16 das den ersten und zweiten Feldbus (10, 20) zur Datenübertragung miteinander verbindet.

18. System gemäß Anspruch 17,
- wobei das Gateway (30) Mittel aufweist, zum Kommunizieren der ersten Zykluszeitdauer (TC1) der ersten Zeitdomäne (16) an den zweiten Feldbus (20) und Kommunizieren der zweiten Zykluszeitdauer (TC2) der zweiten Zeitdomäne (26) an den ersten Feldbus (10).

19. System gemäß einem der Ansprüche 17 oder 18, wobei
- das Gateway (30) Mittel aufweist, zum Empfangen einer Anforderung zweiten Teilnehmergeräts (22, 24) des zweiten Feldbusses (20) eines Zeitschlitzes zur Übertragung von zeitsensitiven Daten vom ersten Feldbus (10) an den zweiten Feldbus (20);
- das Gateway (30) Mittel aufweist, zum Weiterreichen der Anforderung an das erste Teilnehmergerät (12, 14) im ersten Feldbus (10);
- das Gateway (30) Mittel aufweist, zum Empfangen einer Bestätigungsnachricht vom ersten Teilnehmergerät (13, 14) des ersten Feldbusses (10); und
- das Gateway (30) Mittel aufweist, zum Weiterreichen der Bestätigungsnachricht vom Gateway (30) an das zweite Teilnehmergerät (22,24) des zweiten Feldbusses (20).

20. System gemäß einem der Ansprüche 17 bis 19, wobei das Gateway (30) weiterhin eingerichtet ist zum Konvertieren von Zeitpunkten oder Intervallen, welche sich auf die Zeitdomäne eines Feldbusses beziehen, in Zeitpunkte bzw. Intervalle, welche sich auf die Zeitdomäne des jeweils anderen Feldbusses beziehen.

21. System gemäß einem der Ansprüche 19 oder 20, wobei:
- die Anforderung des zweiten Teilnehmergeräts (22, 24) des zweiten Feldbusses (20) nach einem Zeitschlitz (50) zur Übertragung von zeitsensitiven Daten eine Angabe von einem oder mehreren Zeitpunkten und/oder einem oder mehreren Zeitintervallen umfasst, die auf die Zeitdomäne (26) des zweiten Feldbusses (20) bezogen sind;
- das Gateway (30) weiterhin Mittel aufweist zum Bestimmen des einen oder der mehreren Zeitpunkte bzw. des einen oder der mehreren Zeitintervalle aus der Anforderung bezogen auf die Zeitdomäne (16) des ersten Feldbusses (10), unter Berücksichtigung des Zeitversatzes (58) mit Bezug auf den Referenzzeitpunkt (TRef);
- wobei die weitergereichte Anforderung an das erste Teilnehmergerät (12, 14) im ersten Feldbus (10) die Angabe des einen oder der mehreren Zeitpunkte bzw. des einen oder mehreren Zeitintervalle bezogen auf die Zeitdomäne (16) des ersten Feldbusses (10) umfasst;
- wobei die Bestätigungsnachricht von dem ersten Teilnehmergerät (12, 14) des ersten Feldbusses (10) eine Angabe von einem oder mehreren Zeitpunkten und/oder einem oder mehreren Zeitintervallen umfasst, die auf die Zeitdomäne (16) des zweiten Feldbusses (10) bezogen sind;
- das Gateway (30) weiterhin Mittel aufweist zum Bestimmen des einen oder der mehreren Zeitpunkte bzw. des einen oder der mehreren Zeitintervalle aus der Bestätigungsnachricht bezogen auf die Zeitdomäne (26) des zweiten Feldbusses (20), unter Berücksichtigung des Zeitversatzes (58) mit Bezug auf den Referenzzeitpunkt (TRef); und
- wobei die weitergereichte Bestätigungsnachricht an den zweiten Feldbus (20) die Angabe des einen oder der mehreren Zeitpunkte bzw. des einen oder mehreren Zeitintervalle bezogen auf die Zeitdomäne (16) des ersten Feldbusses (10) umfasst.

22. System gemäß einem der Ansprüche 17 bis 21, wobei
- das erste Teilnehmergerät (12, 14) des ersten Feldbusses (10) eingerichtet ist, zum Setzen eines ersten Zeitschlitzes (50) im ersten Feldbus (10), zur Kommunikation zeitsensitiver Daten;
- das zweite Teilnehmergerät (22, 24) des zweiten Feldbusses (20) eingerichtet ist, zum Setzen eines zweiten Zeitschlitzes (52) im zweiten Feldbus (20), zur Kommunikation zeitsensitiver Daten; und
- das Setzen jeweils derart erfolgt, dass sich der erste Zeitschlitz (50) des ersten Feldbusses (10) und der zweite Zeitschlitz (52) des zweiten Feldbusses (20) zeitlich überlappen (OL1, OL2).

23. System gemäß Anspruch 22, wobei das Gateway (30) Mittel zum Durchleiten von zeitsensitiven Daten, während des Überlappens (OL1, OL2) des ersten Zeitschlitzes (50) und des zweiten Zeitschlitzes (52), vom zweiten Feldbus (20) auf den ersten Feldbus (10) oder umgekehrt aufweist.

## Claims

1. Method for interconnecting a first time-sensitive field bus (10) with a second time-sensitive field bus (20), wherein the first time-sensitive field bus (10) comprises a first subscriber device (12, 14) and has its own first time domain (16), and wherein the second time-sensitive field bus (20) comprises a second subscriber device (22, 24) and has its own second time domain (26), wherein the first time domain (16) and the second time domain (26) being frequency-synchronized, wherein the first and second field buses (10, 20) being interconnected to each other by means of a gateway (30) for data transmission, the method comprising the following steps:
- determining a first cycle time duration (TC1) of the first time domain (16) and a second cycle time duration (TC2) of the second time domain (26) by the gateway (30) at a reference time point (TRef); and
- determining a time offset (58) between the first time domain (16) and the second time domain (26) by the gateway (30) at the reference time point (TRef).

2. Method according to claim 1, further comprising the step of communicating the first cycle time duration (TC1) of the first time domain (16) to the second field bus (20) and communicating the second cycle time duration (TC2) of the second time domain (26) to the first field bus (10) by the gateway (30).

3. Method according to claim 1 or 2, wherein the method further comprises the steps of:
- receiving by the gateway (30) a request from the second subscriber device (22, 24) of the second field bus (20) of a time slot (50) for transmitting time-sensitive data from the first field bus (10) to the second field bus (20);
- forwarding by the gateway (30) of the request to the first subscriber device (12, 14) in the first field bus (10);
- receiving by the gateway (30) a confirmation message from the first subscriber device (12, 14) of the first field bus (10); and
- forwarding the confirmation message from the gateway (30) to the second subscriber device (22, 24) of the second field bus (20).

4. Method according to one of claims 1 to 3, wherein the method further comprises the step of converting, by the gateway (30), time points or intervals relating to the time domain of one fieldbus into time points or intervals relating to the time domain of the respective other fieldbus.

5. Method according to one of claims 3 or 4, wherein:
- the request of the second subscriber device (22, 24) of the second field bus (20) of a time slot (50) for transmitting time-sensitive data comprises an indication of one or more time points and/or one or more time intervals relating to the time domain (26) of the second field bus (20);
- the method further comprises determining, by the gateway (30), the one or more points in time and/or the one or more time intervals from the request related to the time domain (16) of the first field bus (10), taking into account the time offset (58) with respect to the reference time point (TRef);
- wherein the forwarded request to the first subscriber device (12, 14) in the first field bus (10) comprises the indication of the one or more time points or the one or more time intervals with respect to the time domain (16) of the first field bus (10);
- wherein the confirmation message from the first subscriber device (12, 14) of the first field bus (10) comprises an indication of one or more points in time and/or one or more time intervals related to the time domain (16) of the second field bus (10);
- the method further comprising determining, by the gateway (30), the one or more time points and/or the one or more time intervals from the confirmation message with respect to the time domain (26) of the second field bus (20), taking into account the time offset (58) with respect to the reference time point (TRef); and
- wherein the forwarded confirmation message to the second subscriber device (22, 24) of the second field bus (20) comprises the indication of the one or more time points or the one or more time intervals with respect to the time domain (16) of the first field bus (10).

6. Method according to any one of claims 1 to 5, wherein the method further comprises the steps of:
- setting a first time slot (50) for communicating time-sensitive data in the first field bus (10) by the first subscriber device (12, 14) of the first field bus (10); and
- setting a second time slot (52) for the communication of time-sensitive data in the second field bus (20) by the second subscriber device (22, 24) of the second field bus;
- wherein the setting being carried out in each case in such a way that the first time slot (50) of the first field bus (10) and the second time slot (52) of the second field bus (20) overlap in time (OL1, OL2).

7. Method according to claim 6, wherein the method further comprises the following step:
passing time-sensitive data from the second field bus (20) to the first field bus (10) or vice versa by the gateway (30) during the overlap (OL1, OL2) of the first time slot (50) and the second time slot (52).

8. Method according to claim 6, wherein the method further comprises the steps of:
transmitting non-time sensitive data, by the gateway (30), in times outside the first time slot (50) of the first field bus (10) and outside the second time slot (52) of the second field bus (20) between the first field bus (10) and the second field bus (20).

9. Method according to any one of claims 1 to 6, wherein between the first time domain (16) and the second time domain (26) is given:
- different durations (TS1, TS2) of the first and second time slots (50, 52); and/or
- temporal differences (TD) between first and second time slots (50, 52).

10. Method according to any one of claims 1 to 9, wherein the gateway (30) comprises a first timer (36) and a second timer (38), and the method for frequency synchronization of the two field buses (10, 20) further comprises the following steps:
- synchronizing the first timer (36) as a slave with the first time domain (16) of the first field bus (10);
- synchronizing the second timer (38) as a slave with the second time domain (26) of the second field bus (20);
- initially synchronizing only the frequency of the first timer (36) as a slave with the frequency (f2) of the second time domain (26) of the second timer (38); and then
- setting the first timer (36) as master for the first field bus (10) in order to set the frequency (f1) of the first field bus (10) to the frequency of the first timer (38).

11. Gateway (30) for interconnecting at least two time-sensitive field buses (10, 20) with different time domains (16, 26), wherein the different time domains are frequency-synchronized, comprising:
- means for determining a first cycle time duration (TC1) of the first time domain (10) and a second cycle time duration (TC2) of the second time domain (20) at a reference time point (TRef); and
- means for determining a time offset (58) between the first time domain (16) and the second time domain (26) at the reference time point (TRef).

12. Gateway according to claim 11, further comprising:
- Means for communicating the first cycle time duration (TC1) of the first time domain (16) to the second field bus (20) and for communicating the second cycle time duration (TC2) of the second time domain (26) to the first field bus (10).

13. Gateway according to one of claims 11 or 12, further comprising
- means for receiving a request from the second subscriber device (22, 24) of the field bus (20) of a time slot (50), for transmitting time-sensitive data from the first field bus (10) to the second field bus (20);
- means for forwarding the request to a first subscriber device (12, 14) in the first field bus (10);
- means for receiving an acknowledgement message from the first subscriber device (12, 14) of the first field bus (10); and
- means for forwarding the confirmation message from the gateway (30) to the second subscriber device (22, 24) of the second field bus (20).

14. Gateway (30) according to one of claims 11 to 13, wherein the gateway (30) is further arranged for converting time points or intervals relating to the time domain of one fieldbus into time points or intervals relating to the time domain of the respective other fieldbus.

15. Gateway according to one of claims 13 or 14, wherein:
- the request of the second field bus (20) for a time slot (50) for transmitting time-sensitive data comprises an indication of one or more time points and/or one or more time intervals, which are related to the time domain (26) of the second field bus (20);
- the gateway (30) further comprises means for determining the one or more points in time and/or the one or more time intervals from the request related to the time domain (16) of the first field bus (10), taking into account the time offset (58) with respect to the reference time point (TRef);
- wherein the forwarded request to the first subscriber device (12, 14) in the first field bus (10) comprises the indication of the one or more time points or the one or more time intervals with respect to the time domain (16) of the first field bus (10);
- wherein the confirmation message from the first subscriber device (12, 14) of the first field bus (10) comprises an indication of one or more time points and/or one or more time intervals related to the time domain (16) of the second field bus (10);
- the gateway (30) further comprises means for determining the one or more points in time and/or the one or more time intervals from the confirmation message with respect to the time domain (26) of the second field bus (20), taking into account the time offset (58) with respect to the reference time point (TRef); and
- wherein the forwarded confirmation message to the second field bus (20) comprises the indication of the one or more time points or the one or more time intervals with respect to the time domain (16) of the first field bus (10).

16. Gateway according to one of claims 13 to 15, wherein the gateway (30) comprises means for passing time-sensitive data from the second fieldbus (20) to the first fieldbus (10) or vice versa during an overlap (OL1, OL2) of a first time slot (50) of the first fieldbus (10) and a second time slot (52) of the second fieldbus (20).

17. System (1) for interconnecting at least two time-sensitive field buses (10, 20), comprising:
- a first time-sensitive field bus (10), comprising a first subscriber device (12, 14) and a separate first time domain (16), wherein the first time domain (16) comprising first time slots (50) for transmitting time-sensitive data;
- a second time-sensitive field bus (20), comprising a second subscriber device (22, 24) and a separate second time domain (26), wherein the second time domain (26) comprising second time slots (52) for transmitting time-sensitive data; and
- at least one gateway (30), according to one of claims 11 to 16, which interconnects the first and second field buses (10, 20) for data transmission.

18. System according to claim 17,
- wherein the gateway (30) comprises means for communicating the first cycle time duration (TC1) of the first time domain (16) to the second field bus (20) and communicating the second cycle time duration (TC2) of the second time domain (26) to the first field bus (10).

19. System according to one of claims 17 or 18, wherein
- the gateway (30) comprises means for receiving a request from a second subscriber device (22, 24) of the second field bus (20) of a time slot for transmitting time-sensitive data from the first field bus (10) to the second field bus (20);
- the gateway (30) comprises means for forwarding the request to the first subscriber device (12, 14) in the first field bus (10);
- the gateway (30) comprises means for receiving an acknowledgement message from the first subscriber device (13, 14) of the first field bus (10); and
- the gateway (30) comprises means for forwarding the confirmation message from the gateway (30) to the second subscriber device (22, 24) of the second field bus (20).

20. System according to one of claims 17 to 19, wherein the gateway (30) is further arranged for converting time points or intervals relating to the time domain of one fieldbus into time points or intervals relating to the time domain of the respective other fieldbus.

21. System according to one of claims 19 or 20, wherein:
- the request from the second subscriber device (22, 24) of the second field bus (20) for a time slot (50) for transmitting time-sensitive data comprises an indication of one or more time points and/or one or more time intervals related to the time domain (26) of the second field bus (20);
- the gateway (30) further comprises means for determining the one or more points in time and/or the one or more time intervals from the request related to the time domain (16) of the first field bus (10), taking into account the time offset (58) with respect to the reference time point (TRef);
- wherein the forwarded request to the first subscriber device (12, 14) in the first field bus (10) comprises the indication of the one or more time points or the one or more time intervals with respect to the time domain (16) of the first field bus (10);
- wherein the confirmation message from the first subscriber device (12, 14) of the first field bus (10) comprises an indication of one or more time points and/or one or more time intervals related to the time domain (16) of the second field bus (10);
- the gateway (30) further comprises means for determining the one or more points in time and/or the one or more time intervals from the confirmation message with respect to the time domain (26) of the second field bus (20), taking into account the time offset (58) with respect to the reference time point (TRef); and
- wherein the forwarded confirmation message to the second field bus (20) comprises the indication of the one or more time points or the one or more time intervals with respect to the time domain (16) of the first field bus (10) .

22. System according to one of claims 17 to 21, wherein
- the first subscriber device (12, 14) of the first field bus (10) is set up to set a first time slot (50) in the first field bus (10), for communicating time-sensitive data;
- the second subscriber device (22, 24) of the second field bus (20) is set up for setting a second time slot (52) in the second field bus (20), for communicating time-sensitive data; and
- the setting is carried out in each case in such a way that the first time slot (50) of the first field bus (10) and the second time slot (52) of the second field bus (20) overlap in time (OL1, OL2).

23. System according to claim 22, wherein the gateway (30) comprises means for passing time-sensitive data, during the overlapping (OL1, OL2) of the first time slot (50) and the second time slot (52), from the second field bus (20) to the first field bus (10) or vice versa.

## Revendications

1. Procédé de mise en réseau d'un premier bus de terrain (10) sensible au temps avec un deuxième bus de terrain (20) sensible au temps, dans lequel le premier bus de terrain (10) sensible au temps comprend un premier dispositif participant (12, 14) et comprend un premier domaine temporel dédié (16), et dans lequel le deuxième bus de terrain (20) sensible au temps comprend un deuxième dispositif participant (22, 24) et comprend un deuxième domaine temporel dédié (26), dans lequel le premier domaine temporel (16) et le deuxième domaine temporel (26) sont synchronisés en fréquence, dans lequel le premier et le deuxième bus de terrain (10, 20) sont reliés entre eux au moyen d'une passerelle (30) pour la transmission de données, dans lequel le procédé comprend les étapes suivantes :
- définition d'une première durée de cycle (TC1) du premier domaine temporel (16) et d'une deuxième durée de cycle (TC2) du deuxième domaine temporel (26) par la passerelle (30) à un moment de référence (TRef) ; et
- définition d'un décalage temporel (58) entre le premier domaine temporel (16) et le deuxième domaine temporel (26) par la passerelle (30) au moment de référence (TRef).

2. Procédé selon la revendication 1, comprenant en outre l'étape de communication de la première durée de cycle (TC1) du premier domaine temporel (16) au deuxième bus de terrain (20) et de communication de la deuxième durée de cycle (TC2) du deuxième domaine temporel (26) au premier bus de terrain (10) par la passerelle (30).

3. Procédé selon la revendication 1 ou 2, dans lequel le procédé comprend en outre les étapes suivantes :
- réception par la passerelle (30) d'une demande du deuxième dispositif participant (22, 24) du deuxième bus de terrain (20) d'un créneau temporel (50) pour transmettre des données sensibles au temps du premier bus de terrain (10) au deuxième bus de terrain (20) ;
- transfert par la passerelle (30) de la demande au premier dispositif participant (12, 14) dans le premier bus de terrain (10) ;
- de réception par la passerelle (30) d'un message de confirmation du premier dispositif participant (12, 14) du premier bus de terrain (10) ; et
- de transfert du message de confirmation de la passerelle (30) au deuxième dispositif participant (22, 24) du deuxième bus de terrain (20).

4. Procédé selon l'une des revendications 1 à 3, dans lequel le procédé comprend en outre l'étape de conversion par la passerelle (30) d'heures ou d'intervalles qui se rapportent au domaine temporel d'un bus de terrain, en heures ou intervalles qui se rapportent au domaine temporel de l'autre bus de terrain respectivement.

5. Procédé selon l'une des revendications 3 ou 4, dans lequel :
- la demande du deuxième dispositif participant (22, 24) du deuxième bus de terrain (20) d'un créneau temporel (50) pour la transmission de données sensibles au temps comprend une indication d'un ou de plusieurs moments et/ou d'un ou de plusieurs intervalles de temps qui se rapportent au domaine temporel (26) du deuxième bus de terrain (20) ;
- le procédé comprend en outre une définition, par la passerelle (30), du moment ou des plusieurs moments ou de l'intervalle de temps ou des plusieurs intervalles de temps à partir de la demande relative au domaine temporel (16) du premier bus de terrain (10), en tenant compte du décalage temporel (58) par rapport au moment de référence (TRef) ;
- la demande transférée au premier dispositif participant (12, 14) dans le premier bus de terrain (10) comprend l'indication du moment ou des plusieurs moments ou de l'intervalle de temps ou des plusieurs intervalles de temps relatifs au domaine temporel (16) du premier bus de terrain (10) ;
- dans laquelle le message de confirmation provenant du premier dispositif participant (12, 14) du premier bus de terrain (10) comprend une indication d'un moment ou de plusieurs moments et/ou d'un intervalle de temps ou de plusieurs intervalles de temps qui se rapportent au domaine temporel (16) du deuxième bus de terrain (20) ;
- le procédé comprend en outre une définition, par la passerelle (30), du moment ou de plusieurs moments ou de l'intervalle de temps ou des plusieurs intervalles de temps à partir du message de confirmation relatif au domaine temporel (26) du deuxième bus de terrain (20), en tenant compte du décalage temporel (58) par rapport au moment de référence (TRef) ; et
- dans lequel le message de confirmation transféré au deuxième dispositif participant (22, 24) du deuxième bus de terrain (20) comprend l'indication du moment ou des plusieurs moments ou de l'intervalle de temps ou des plusieurs intervalles de temps relatifs au domaine temporel (16) du premier bus de terrain (10).

6. Procédé selon l'une des revendications 1 à 5, dans lequel le procédé comprend en outre les étapes suivantes :
- mise en place d'un premier créneau temporel (50) pour la communication de données sensibles au temps dans le premier bus de terrain (10) par le premier dispositif participant (12, 14) du premier bus de terrain (10) ; et
- mise en place d'un deuxième créneau temporel (52) pour la communication de données sensibles au temps dans le deuxième bus de terrain (20) par le deuxième dispositif participant (22, 24) du deuxième bus de terrain ;
- dans lequel la mise en place s'effectue respectivement de telle manière que le premier créneau temporel (50) du premier bus de terrain (10) et le deuxième créneau temporel (52) du deuxième bus de terrain (20) se chevauchent dans le temps (OL1, OL2).

7. Procédé selon la revendication 6, dans lequel le procédé comprend en outre l'étape suivante :
acheminement de données sensibles au temps du deuxième bus de terrain (20) sur le premier bus de terrain (10) ou inversement par la passerelle (30) pendant le chevauchement (OL1, OL2) du premier créneau temporel (50) et du deuxième créneau temporel (52).

8. Procédé selon la revendication 6, dans lequel le procédé comprend en outre l'étape suivante :
transmission de données non sensibles au temps, par la passerelle (30), à des moments en dehors du premier créneau temporel (50) du premier bus de terrain (10) et en dehors du deuxième créneau temporel (52) du deuxième bus de terrain (20) entre le premier bus de terrain (10) et le deuxième bus de terrain (20).

9. Procédé selon l'une des revendications 1 à 6, dans lequel il existe entre le premier domaine temporel (16) et le deuxième domaine temporel (26) :
- des durées différentes (TS1, TS2) pour les premier et deuxième créneaux temporels (50, 52) ; et/ou
- des différences temporelles (TD) entre les premier et deuxième créneaux temporels (50, 52).

10. Procédé selon l'une des revendications 1 à 9, dans lequel la passerelle (30) comprend un premier temporisateur (36) et un deuxième temporisateur (38), dans lequel le procédé comprend en outre, pour la synchronisation de fréquence des deux buses de terrain (10, 20), les étapes suivantes :
- synchronisation du premier temporisateur (36) en tant qu'esclave avec le premier domaine temporel (16) du premier bus de terrain (10) ;
- synchronisation du deuxième temporisateur (38) en tant qu'esclave avec le deuxième domaine temporel (26) du deuxième bus de terrain (20) ;
- synchronisation d'abord exclusivement de la fréquence du premier temporisateur (36) en tant qu'esclave avec la fréquence (f2) du deuxième domaine temporel (26) du deuxième temporisateur (38) ; puis
- définition du premier temporisateur (36) en tant que maître pour le premier bus de terrain (10) pour régler la fréquence (f1) du premier bus de terrain (10) sur la fréquence du premier temporisateur (38).

11. Passerelle (30) de mise en réseau d'au moins deux bus de terrain (10, 20) sensibles au temps avec des domaines temporels (16, 26) différents, dans laquelle, les différents domaines temporels sont synchronisés en fréquence, comportant :
- des moyens de définition d'une première durée de cycle (TC1) du premier domaine temporel (10) et d'une deuxième durée de cycle (TC2) du deuxième domaine temporel (20) à un moment de référence (TRef) ; et
- des moyens de définition d'un décalage temporel (58) entre le premier domaine temporel (16) et le deuxième domaine temporel (26) au moment de référence (TRef).

12. Passerelle selon la revendication 11, comportant en outre :
- des moyens de communication de la première durée de cycle (TC1) du premier domaine temporel (16) au deuxième bus de terrain (20) et de communication de la deuxième durée de cycle (TC2) du deuxième domaine temporel (26) au premier bus de terrain (10).

13. Passerelle selon l'une des revendications 11 ou 12, comportant en outre
- des moyens pour recevoir une demande du deuxième dispositif participant (22, 24) du bus de terrain (20) d'un créneau temporel (50), pour la transmission de données sensibles au temps du premier bus de terrain (10) au deuxième bus de terrain (20) ;
- des moyens de transfert de la demande à un premier dispositif participant (12, 14) dans le premier bus de terrain (10) ;
- des moyens de réception d'un message de confirmation du premier dispositif participant (12, 14) du premier bus de terrain (10) ; et
- des moyens de transfert du message de confirmation de la passerelle (30) au deuxième dispositif participant (22, 24) du deuxième bus de terrain (20).

14. Passerelle (30) selon l'une des revendications 11 à 13, dans laquelle la passerelle (30) est configurée en outre pour convertir des moments ou des intervalles de temps qui se rapportent au domaine temporel d'un bus de terrain en moments ou en intervalles qui se rapportent au domaine temporel de l'autre bus de terrain respectivement.

15. Passerelle selon l'une des revendications 13 ou 14, dans laquelle
- la demande du deuxième bus de terrain (20) après un créneau temporel (50) pour la transmission de données sensibles au temps comprend une indication d'un moment ou plusieurs moments et/ou d'un intervalle de temps ou de plusieurs intervalles de temps qui se rapportent au domaine temporel (26) du deuxième bus de terrain (20) ;
- la passerelle (30) comprend en outre des moyens pour définir le moment ou les plusieurs moments ou l'intervalle de temps ou les plusieurs intervalles de temps à partir de la demande relative au domaine temporel (16) du premier bus de terrain (10), en tenant compte du décalage temporel (58) par rapport au moment de référence (TRef) ;
- la demande transférée au premier dispositif participant (12, 14) dans le premier bus de terrain (10) comprend l'indication du moment ou des plusieurs moments ou de l'intervalle de temps ou des plusieurs intervalles de temps relatifs au domaine temporel (16) du premier bus de terrain (10) ;
- dans laquelle le message de confirmation provenant du premier dispositif participant (12, 14) du premier bus de terrain (10) comprend une indication d'un moment ou de plusieurs moments et/ou d'un intervalle de temps ou de plusieurs intervalles de temps qui se rapportent au domaine temporel (16) du deuxième bus de terrain (20) ;
- la passerelle (30) comprend en outre des moyens pour définir le moment ou les plusieurs moments ou l'intervalle de temps ou les plusieurs intervalles de temps à partir du message de confirmation relatif au domaine temporel (26) du deuxième bus de terrain (20), en tenant compte du décalage temporel (58) par rapport au moment de référence (TRef) ; et
- dans laquelle le message de confirmation transférée au deuxième bus de terrain (20) comprend l'indication du moment ou des plusieurs moments ou de l'intervalle de temps ou des plusieurs intervalles de temps relatifs au domaine temporel (16) du premier bus de terrain (10).

16. Passerelle selon l'une des revendications 13 à 15, dans laquelle la passerelle (30) comprend des moyens pour acheminer des données sensibles au temps du deuxième bus de terrain (20) au premier bus de terrain (10) ou inversement, pendant un chevauchement (OL1, OL2) d'un premier créneau temporel (50) du premier bus de terrain (10) et d'un deuxième créneau temporel (52) du deuxième bus de terrain (20).

17. Système (1) de mise en réseau d'au moins deux bus de terrain (10, 20) sensibles au temps, comportant :
- un premier bus de terrain (10) sensible au temps, comportant un premier dispositif participant (12, 14) et un premier domaine temporel (16) dédié, dans lequel le premier domaine temporel (16) comprend des premiers créneaux temporels (50) pour la transmission de données sensibles au temps ;
- un deuxième bus de terrain (20) sensible au temps, comportant un deuxième dispositif participant (22, 24) et un deuxième domaine temporel (26) dédié, dans lequel le deuxième domaine temporel (26) comprend des deuxièmes créneaux temporels (52) pour la transmission de données sensibles au temps ; et
- au moins une passerelle (30) selon l'une des revendications 11 à 16, qui relie le premier et le deuxième bus de terrain (10, 20) l'un à l'autre pour la transmission de données.

18. Système selon la revendication 17,
- dans lequel la passerelle (30) comprend des moyens pour communiquer la première durée de cycle (TC1) du premier domaine temporel (16) au deuxième bus de terrain (20) et pour communiquer la deuxième durée de cycle (TC2) du deuxième domaine temporel (26) au premier bus de terrain (10).

19. Système selon l'une des revendications 17 ou 18, dans lequel
- la passerelle (30) comprend des moyens pour recevoir une demande d'un deuxième dispositif participant (22, 24) du deuxième bus de terrain (20) d'un créneau temporel pour la transmission de données sensibles au temps du premier bus de terrain (10) au deuxième bus de terrain (20) ;
- la passerelle (30) comprend des moyens pour transférer la demande au premier dispositif participant (12, 14) dans le premier bus de terrain (10) ;
- la passerelle (30) comprend des moyens pour recevoir un message de confirmation du premier dispositif participant (12, 14) du premier bus de terrain (10) ; et
- la passerelle (30) comprend des moyens pour transférer le message de confirmation de la passerelle (30) au deuxième dispositif participant (22, 24) du deuxième bus de terrain (20).

20. Système selon l'une des revendications 17 à 19, dans lequel la passerelle (30) est en outre configurée pour convertir des moments ou intervalles qui se rapportent au domaine temporel d'un bus de terrain en moments ou intervalles qui se rapportent au domaine temporel de l'autre bus de terrain respectif.

21. Système selon l'une des revendications 19 ou 20, dans lequel :
- la demande du deuxième dispositif participant (22, 24) du deuxième bus de terrain (20) après un créneau temporel (50) pour la transmission de données sensibles au temps comprend une indication d'un ou de plusieurs moments et/ou d'un ou de plusieurs intervalles de temps qui se rapportent au domaine temporel (26) du deuxième bus de terrain (20) ;
- la passerelle (30) comprend en outre des moyens pour définir le moment ou les plusieurs moments ou l'intervalle de temps ou les plusieurs intervalles de temps à partir de la demande relative au domaine temporel (16) du premier bus de terrain (10), en tenant compte du décalage temporel (58) par rapport au moment de référence (TRef) ;
- la demande transférée au premier dispositif participant (12, 14) dans le premier bus de terrain (10) comprend l'indication du moment ou des plusieurs moments ou de l'intervalle de temps ou des plusieurs intervalles de temps relatifs au domaine temporel (16) du premier bus de terrain (10) ;
- dans laquelle le message de confirmation provenant du premier dispositif participant (12, 14) du premier bus de terrain (10) comprend une indication d'un moment ou de plusieurs moments et/ou d'un intervalle de temps ou de plusieurs intervalles de temps qui se rapportent au domaine temporel (16) du deuxième bus de terrain (20) ;
- la passerelle (30) comprend en outre des moyens pour définir le moment ou les plusieurs moments ou l'intervalle de temps ou les plusieurs intervalles de temps à partir du message de confirmation relatif au domaine temporel (26) du deuxième bus de terrain (20), en tenant compte du décalage temporel (58) par rapport au moment de référence (TRef) ; et
- dans laquelle le message de confirmation transférée au deuxième bus de terrain (20) comprend l'indication du moment ou des plusieurs moments ou de l'intervalle de temps ou des plusieurs intervalles de temps relatifs au domaine temporel (16) du premier bus de terrain (10).

22. Système selon l'une des revendications 17 à 21, dans lequel
- le premier dispositif participant (12, 14) du premier bus de terrain (10) est configuré pour mettre en place un premier créneau temporel (50) dans le premier bus de terrain (10), pour communiquer des données sensibles au temps ;
- le deuxième dispositif participant (22, 24) du deuxième bus de terrain (20) est configuré pour mettre en place un deuxième créneau temporel (52) dans le deuxième bus de terrain (20), pour communiquer des données sensibles au temps ; et
- la mise en place s'effectue respectivement de telle manière que le premier créneau temporel (50) du premier bus de terrain (10) et le deuxième créneau temporel (52) du deuxième bus de terrain (20) se chevauchent dans le temps (OL1, OL2).

23. Système selon la revendication 22, dans lequel la passerelle (30) comprend des moyens d'acheminement de données sensibles au temps, pendant le chevauchement (OL1, OL2) du premier créneau temporel (50) et du deuxième créneau temporel (52), du deuxième bus de terrain (20) sur le premier bus de terrain (10) ou inversement.
